(19) **Europäisches Patentamt**
**European Patent Office**
**Office européen des brevets**

(11) **EP 3 809 691 B1**

(12) ## EUROPÄISCHE PATENTSCHRIFT

(45) Veröffentlichungstag und Bekanntmachung des Hinweises auf die Patenterteilung:
**01.04.2026 Patentblatt 2026/14**

(21) Anmeldenummer: **20203728.9**

(22) Anmeldetag: **30.05.2017**

(51) Internationale Patentklassifikation (IPC):
*H04N 23/745* (2023.01)   *B27N 3/14* (2006.01)
*G06F 18/25* (2023.01)   *G06V 20/58* (2022.01)

(52) Gemeinsame Patentklassifikation (CPC):
**B27N 3/14; G06F 18/251; G06V 20/584; H04N 23/745;** B27N 3/143; H04N 23/741

(54) **VERFAHREN ZUR ERKENNUNG UND KORREKTUR VON BILDFEHLERN SOWIE BILDVERARBEITUNGSEINHEIT UND COMPUTERPROGRAMM HIERZU**

METHOD FOR DETECTING AND CORRECTING IMAGE ERRORS AND IMAGE PROCESSING UNIT AND COMPUTER PROGRAMME FOR SAME

PROCÉDÉ DE RECONNAISSANCE ET DE CORRECTION D'ERREURS D'IMAGE AINSI QU'UNITÉ DE TRAITEMENT DES IMAGES ET PROGRAMME INFORMATIQUE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2016 DE 102016109887**

(43) Veröffentlichungstag der Anmeldung:
**21.04.2021 Patentblatt 2021/16**

(62) Dokumentnummer(n) der früheren Anmeldung(en) nach Art. 76 EPÜ:
**17173419.7 / 3 253 045**

(73) Patentinhaber: **Dream CHIP Technologies GmbH 30827 Garbsen (DE)**

(72) Erfinder:
• **Volkers, Dr. Hans**
**verstorben (DE)**
• **Fiedler, Martin**
**30655 Hannover (DE)**
• **Hesselbarth, Dr. Sebastian**
**22769 Hamburg (DE)**
• **Schewior, Dr. Gregor**
**30171 Hannover (DE)**

(74) Vertreter: **Platzöder Patentanwaltsgesellschaft mbH**
**Inselkammerstraße 10**
**82008 Unterhaching (DE)**

(56) Entgegenhaltungen:
**DE-A1- 102013 100 804     US-A1- 2014 153 839 US-A1- 2015 253 198**

• **GUILLAUME FORBIN ET AL: "Nonlinear Flicker Compensation for Archived Film Sequences Using Motion-Compensated Graylevel Tracing", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 18, no. 6, 1 June 2008 (2008-06-01), pages 803 - 816, XP011204596, ISSN: 1051-8215**

EP 3 809 691 B1

## EP 3 809 691 B1

**Beschreibung**

Die Erfindung betrifft ein Verfahren zur Erkennung und Korrektur von durch flackernde Lichtinformationen hervorgerufenen Bildfehlern in von einem Bildsensor erzeugten Bildern.

Die Erfindung betrifft weiterhin eine Bildbearbeitungseinheit und ein Computerprogramm zur Durchführung des Verfahrens.

Eine Vielzahl von Lichtquellen wird heute gepulst betrieben. Sofern die Lichtquelle eingeschaltet ist, wechselt die Lichtquelle dabei mit hoher Frequenz von einem An-Zustand in einen Aus-Zustand oder die Helligkeit der Lichtquelle ändert sich mit hoher Frequenz. Solche gepulsten Lichtquellen können insbesondere gepulste Leuchtdioden (light-emitting diodes, kurz LEDs) sein, die in den letzten Jahren eine überaus weite Verbreitung in vielen Bereichen gefunden haben. Für das menschliche Auge ist das mit dem gepulsten Betrieb der Lichtquelle einhergehende Flackern, das auch als Flicker bezeichnet wird, aufgrund seiner hohen Frequenz nicht sichtbar. Es entsteht daher, sofern die Lichtquelle eingeschaltet ist, für den menschlichen Betrachter der gewünschte Eindruck, dass die Lichtquelle kontinuierlich eingeschaltet ist.

Zur Erfassung und Aufzeichnung von Bildern oder Bildsequenzen, die von LEDs oder anderen gepulsten Lichtquellen emittiertes Licht beinhalten, werden üblicherweise Bildsensoren verwendet, deren Abtastfrequenzen deutlich kleiner sind als die üblicherweise eingesetzten Pulsfrequenzen der gepulsten Lichtquellen. Letztere können ein Vielfaches der Abtastfrequenz betragen. Darüber hinaus sind die Belichtungszeiten der Bildsensoren in der Regel deutlich kürzer als die Periodendauern der gepulsten Lichtquellen. Dies gilt insbesondere im Automotive-Bereich, wo eine Ausrüstung der Fahrzeuge mit einfachen und kostengünstigen Bildsensoren gewünscht ist.

Dadurch kann es dazu kommen, dass der Bildsensor ein Bild erfasst, das den Aus-Zustand der gepulsten Lichtquelle zeigt, obwohl die Lichtquelle eingeschaltet ist. Bei der Erfassung von Bildsequenzen kann es dazu kommen, dass der Bildsensor lange Sequenzen von Bildern erfasst, die ausschließlich den Aus-Zustand der Lichtquelle zeigen, obwohl diese eingeschaltet ist. Die Wiedergabe der vom Bildsensor aufgenommenen Bildsequenz erzeugt daher den Eindruck, dass die aufgenommene Lichtquelle ausgeschaltet ist, obwohl sie tatsächlich eingeschaltet ist. Die erfassten Bilder bzw. Bildsequenzen enthalten somit Bildfehler, die durch flackernde Lichtinformationen hervorgerufen werden.

Unter einer flackernden Lichtinformation im Sinne der vorliegenden Erfindung wird verstanden, dass die Lichtquelle periodisch ihre Helligkeit verändert, wie dies bei der Ansteuerung von LED-Lichtquellen oder anderen gepulsten Lichtquellen der Fall ist. Ein solches Flackern der Lichtquelle bzw. der von ihr emittierten Lichtinformation wird auch als Flicker bezeichnet. Die Begriffe Flackern und Flicker werden für die Zwecke dieser Anmeldung daher synonym verwendet.

Der Begriff Belichtungszeit wird für die Zwecke der vorliegenden Anmeldung synonym zu dem insbesondere im Bereich der Halbleiter-Bildsensoren üblichen Begriff Integrationszeit verwendet.

Von besonderer praktischer Bedeutung ist die zuvor dargestellte Problematik bei der Erfassung und Aufzeichnung von Bildern oder Bildsequenzen, die von gepulsten LEDs emittiertes Licht enthalten. Da auch Brems- und Blinklichter aktueller Fahrzeuge mit gepulsten LEDs betrieben werden, können Bildfehler der zuvor beschriebenen Art beim Einsatz von Bildsensoren im Automotive-Bereich inakzeptable Sicherheitsrisiken hervorrufen. Dies ist insbesondere kritisch, wenn eine elektronische Kamera die Funktion des Rückspiegels in einem Kraftfahrzeug übernimmt und das aufgezeichnete Bild nach der Bildverarbeitung auf einem Display angezeigt wird. Dann kann es beispielsweise dazu kommen, dass z.B. ein Blinklicht eines Fahrzeuges in der Umgebung nicht oder nicht rechtzeitig wiedergegeben wird.

Kameras, die in Kraftfahrzeuge integriert sind, d.h. Fahrzeugkameras, werden in Kraftfahrzeugen für eine Vielzahl von Aufgaben eingesetzt. Sie dienen z. B. als Frontkameras, als Rückkameras bzw. Rückfahrkameras oder als Seitenkameras zur Beobachtung des Fahrzeugumfelds durch den Fahrer. Sie fungieren aber auch in der Form von Monokameras oder Stereokameras als optische Sensoren, die zur Ermittlung von Sensordaten für Fahrerassistenzsysteme wie Notbremsassistenzsysteme, Abstands- und Spurhalteassistenzsysteme und andere Assistenzsysteme genutzt werden. Im Zusammenhang mit solchen in Kraftfahrzeuge integrierten Kameras kann die unvollständige und/oder fehlerhafte Wiedergabe von Bildsequenzen, die flackernde Lichtinformationen aufweisen, zu einem erhöhten Unfallrisiko führen.

Die Vermeidung der Entstehung von Bildfehlern, die durch gepulste LEDs hervorgerufen werden, wird dadurch erschwert, dass marktübliche gepulste LEDs mit unterschiedlichsten Pulsfrequenzen betrieben werden. Insbesondere im Umfeld eines Fahrzeugs sind heute gepulste Lichtquellen eines breiten Spektrums unterschiedlichster Pulsfrequenzen zu beobachten, wobei sämtliche Lichtquellen innerhalb eines Bildes vom Bildsensor erfasst werden müssen. Eine Synchronisierung der Abtastintervalle des Bildsensors mit den Einschaltphasen der LEDs kommt zur Lösung des Problems daher nicht in Betracht.

Aus US 2004/0012692 A1 ist ein Verfahren zur Flicker-Erkennung bekannt, bei dem Bilder mit zwei oder mehr verschiedenen Belichtungszeiten aufgenommen werden, wobei die längere der Belichtungszeiten insbesondere so lang bemessen sein kann, dass keine flickerbedingten Bildfehler auftreten. Durch einen Vergleich der mit unterschiedlichen Belichtungszeiten aufgenommenen Bilder wird ermittelt, ob Flicker vorhanden ist oder nicht. Wenn Flicker erkannt wurde, wird eine Flickerkompensation vorgenommen, indem die Belichtungszeit so gewählt wird, dass sie ein ganzzahliges Vielfaches der Flicker-Periodendauer, d. h. des Kehrwerts der Pulsfrequenz der gepulsten Lichtquelle beträgt.

Das aus US 2004/0012692 A1 bekannte Verfahren liefert gute Ergebnisse, wenn zum einen die Belichtungszeit ausreichend lang gewählt werden kann und zum anderen die Pulsfrequenz der gepulsten Lichtquellen bekannt und einheitlich ist. Allerdings sind diese Voraussetzungen nicht erfüllt, wenn Bilder oder Bildsequenzen, die von gepulsten LEDs emittiertes Licht beinhalten, mit einfachen und kostengünstigen Bildsensoren erfasst werden sollen. Zum einen sind die Belichtungszeiten derartiger Bildsensoren kurz und können nur in begrenztem Maße verlängert werden, ohne dass es zu einer Überbelichtung kommt. Dies liegt darin begründet, dass einfache und kostengünstige Bildsensoren, wie sie insbesondere im Automotive-Bereich zum Einsatz kommen, nicht über eine Blende verfügen, mit deren Hilfe der Lichtdurchlass an die Belichtungszeit angepasst werden kann. Zum anderen sind die Pulsfrequenzen der gepulsten LEDs im Umfeld des Bildsensors, insbesondere im Umfeld eines Fahrzeugs, nicht bekannt und darüber hinaus auch nicht einheitlich, sondern können völlig unterschiedliche Werte in einem breiten Spektrum aufweisen. Bei der Erfassung und Aufzeichnung von Bildern oder Bildsequenzen, die von gepulsten LEDs emittiertes Licht beinhalten, kann das aus US 2004/0012692 A1 bekannte Verfahren daher keine zufriedenstellenden Ergebnisse liefern. Weitere Verfahren zur Flicker-Erkennung sind aus US2014/0153839 A1 und US2015/0253198 A1 bekannt.

Aufgabe der vorliegenden Erfindung ist es daher, ein verbessertes Verfahren zur Erkennung und Korrektur von durch flackernde Lichtinformationen hervorgerufenen Bildfehlern zu schaffen, das für Bilder mit kurzer Belichtungszeit geeignet ist und eine Erkennung und Korrektur von Bildfehlern erlaubt, die durch gepulste LEDs verursacht werden.

Die Aufgabe wird durch das Verfahren mit den Merkmalen des Anspruchs 1 sowie durch die zur Durchführung des Verfahrens ausgebildete Bildverarbeitungseinheit mit den Merkmalen des Anspruchs 16 und das Computerprogramm mit den Merkmalen des Anspruchs 17 gelöst. Vorteilhafte Ausführungsformen sind in den Unteransprüchen beschrieben.

Zur Erkennung und Korrektur von Bildfehlern, die durch flackernde Lichtinformationen hervorgerufen werden, in von einem Bildsensor erzeugten Bildern wird vorgeschlagen, eine Belichtungsreihe einzulesen, die mindestens ein Referenzbild und mindestens ein Vergleichsbild, d. h. mindestens zwei Bilder, umfasst. Erfindungsgemäß ist dabei die Belichtungszeit, mit der das mindestens eine Referenzbild aufgenommen wurde, länger als die Belichtungszeit, mit der das mindestens eine Vergleichsbild aufgenommen wurde, d. h. die Belichtungszeit des Referenzbildes ist länger als die Belichtungszeit des Vergleichsbildes.

Die Belichtungsreihe kann beispielsweise von einem Bildsensor aufgenommen und in einem Datenspeicher zwischengespeichert werden. Ein solcher Bildsensor kann beispielsweise eine Videokamera, insbesondere eine digitale Videokamera, eine andere Art von Kamera oder ein Bestandteil einer solchen Kamera sein.

Erfindungsgemäß können insbesondere mehrere Vergleichsbilder eingelesen werden, welche mit unterschiedlichen Belichtungszeiten erzeugt worden sind, die jeweils kürzer sind als die Belichtungszeit des Referenzbildes. So ist es beispielsweise denkbar, dass die Belichtungszeit des Referenzbildes lang ist, während die Belichtungszeit eines Vergleichsbildes kurz ist und die Belichtungszeit eines weiteren Vergleichsbildes sehr kurz ist. Die Anzahl der Vergleichsbilder unterschiedlicher oder gleicher Belichtungszeit ist grundsätzlich unbegrenzt.

Erfindungsgemäß ist es notwendig, dass mindestens ein Referenzbild eingelesen wird, dessen Belichtungszeit länger ist als die Belichtungszeit des mindestens einen Vergleichsbildes. Das Bild der eingelesenen Belichtungsreihe, das mit der längsten Belichtungszeit erzeugt wurde, wobei diese Zeit länger ist als die Belichtungszeit mindestens eines weiteren Bildes, ist ein Referenzbild im Sinne der vorliegenden Erfindung. Das Bild der eingelesenen Belichtungsreihe, das mit der kürzesten Belichtungszeit erzeugt wurde, wobei diese Zeit kürzer ist als die Belichtungszeit mindestens eines weiteren Bildes, ist ein Vergleichsbild im Sinne der vorliegenden Erfindung.

Die Bilder der Belichtungsreihe zeigen erfindungsgemäß dieselbe Szene. Unter einer Szene wird dabei ein Ausschnitt der sichtbaren Umgebung des Bildsensors zu einem bestimmten Zeitpunkt verstanden. Unter derselben Szene wird ein identischer oder näherungsweise identischer Ausschnitt der sichtbaren Umgebung zu einem identischen oder näherungsweise identischem Zeitpunkt verstanden.

Die verschiedenen Bilder einer Belichtungsreihe können erfindungsgemäß entweder zeitgleich aufgenommen worden sein, beispielsweise mit Hilfe eines Split-Pixel-Sensors, oder sie können in sehr kurzen zeitlichen Abständen nacheinander aufgenommen worden sein.

In einem weiteren Schritt des Verfahrens werden erfindungsgemäß örtliche Abweichungen der Bilddaten des Vergleichsbildes von den Bilddaten des Referenzbildes ermittelt, indem die Bilddaten des Vergleichsbildes örtlich mit den Bilddaten des Referenzbildes verglichen werden. Unter örtlichen Abweichungen werden dabei Abweichungen an einer bestimmten Position des Bildes verstanden.

Unter örtlichem Vergleichen wird ein Vergleichen der Bilddaten an einer bestimmten Position des Bildes verstanden. Das örtliche Vergleichen und/oder die dadurch ermittelten örtlichen Abweichungen der Bilddaten können sich beispielsweise auf die Positionen einzelner Pixel im Bild beziehen, wenn einzelne Pixel verglichen werden. Hierdurch wird eine besonders hohe Genauigkeit erzielt. Es können aber auch größere Bereiche des Bildes, beispielsweise Bildblöcke, miteinander verglichen werden, wobei sich das örtliche Vergleichen und/oder die dadurch ermittelten örtlichen Abweichungen der Bilddaten in diesem Fall auf die Positionen von Bildblöcken im Bild beziehen. Hierdurch wird der mit dem Ermitteln der örtlichen Abweichungen verbundene Rechen- und Speicheraufwand verringert. Es können grundsätzlich auch ganze Bilder miteinander verglichen werden, wodurch der Rechen- und Speicheraufwand weiter verringert werden kann. Die örtlichen Abweichungen können somit beispielsweise in pixelgenauer, blockgenauer oder bildgenauer Auflösung ermittelt werden.

Aufgrund der längeren Belichtungszeit des Referenzbildes weichen die Bilddaten des Referenzbildes grundsätzlich von den Bilddaten des Vergleichsbildes ab, obwohl beide Bilder dieselbe Szene zeigen. Insbesondere weist das Referenzbild in der Regel wegen seiner längeren Belichtungszeit im Vergleich zu dem Vergleichsbild eine größere Helligkeit auf. Um die Bilddaten der mit unterschiedlicher Belichtungszeit aufgenommenen Bilder zu vergleichen, kann eine Normierung der Bilddaten vorgenommen werden, die sich beispielsweise auf eine absolute Helligkeit und/oder eine bestimmte Belichtungszeit beziehen kann. Hierauf wird später noch näher eingegangen.

Erfindungsgemäß wird durch das Ermitteln örtlicher Abweichungen anhand eines Vergleichs der mit unterschiedlicher Belichtungszeit aufgenommenen Bilder das Vorhandensein flackernder Lichtinformationen, d. h. das Vorhandensein von Flicker, erkannt. Die flackernden Lichtinformationen können insbesondere in Form von Licht vorliegen, das durch gepulste Lichtquellen, z. B. LEDs, emittiert wird. Die Wahrscheinlichkeit, dass ein aufgenommenes Bild den Aus-Zustand einer gepulsten Lichtquelle zeigt, obwohl die Lichtquelle eingeschaltet ist, verringert sich mit wachsender Belichtungszeit. Durch die längere Belichtungszeit des Referenzbildes kann daher erreicht werden, dass das Referenzbild zumindest teilweise den An-Zustand der gepulsten Lichtquelle zeigt, während das mit kürzerer Belichtungszeit aufgenommene Vergleichsbild den Aus-Zustand derselben gepulsten Lichtquelle zeigt. Anhand der dadurch hervorgerufenen örtlichen Abweichungen zwischen den Bilddaten des Referenzbildes und den Bilddaten des Vergleichsbildes werden erfindungsgemäß flackernde Lichtinformationen und dadurch hervorgerufene Bildfehler erkannt.

Um flackernde Lichtinformationen und/oder dadurch hervorgerufene Bildfehler zuverlässig zu erkennen, kann die Belichtungszeit des mindestens einen Referenzbildes insbesondere wesentlich länger gewählt werden als die Belichtungszeit des mindestens einen Vergleichsbildes. Dadurch wird vorteilhaft erreicht, dass das mit längerer Belichtungszeit aufgenommene Referenzbild mit hinreichender Wahrscheinlichkeit zumindest teilweise den An-Zustand der gepulsten Lichtquelle zeigt, während das Vergleichsbild den Aus-Zustand derselben gepulsten Lichtquelle zeigt.

Um flackernde Lichtinformationen und/oder dadurch hervorgerufene Bildfehler zuverlässig zu erkennen, kann die Belichtungszeit des Referenzbildes vorteilhaft insbesondere so lang gewählt werden, dass der An-Zustand der eingeschalteten gepulsten Lichtquellen, z. B. eingeschalteter LEDs, mit hoher Wahrscheinlichkeit - - oder sogar in jedem Fall - vollständig oder zumindest teilweise in die Belichtungszeit fällt und somit durch das Referenzbild erfasst wird.

Dabei kann beispielsweise die Belichtungszeit des Referenzbildes so gewählt werden, dass sie mindestens dem Kehrwert der kleinsten in Betracht kommenden Pulsfrequenz der in der Szene zu erwartenden gepulsten Lichtquellen entspricht. Dann fällt der An-Zustand der eingeschalteten gepulsten Lichtquellen in jedem Fall vollständig in die Belichtungszeit des Referenzbildes und wird somit sicher durch das Referenzbild erfasst.

Des Weiteren kann beispielsweise die Belichtungszeit des Referenzbildes so gewählt werden, dass sie mindestens 50 % des Kehrwerts der Bildaufnahmefrequenz entspricht (z.B. 10 ms bei 50 Hz). Dann fällt der An-Zustand der eingeschalteten gepulsten Lichtquellen in jedem Fall zu einem Teil (z.B. mindestens jeder zweite Impuls bei 100 Hz Pulslichtfrequenz) in die Belichtungszeit des Referenzbildes und wird somit sicher durch das Referenzbild erfasst.

Ein zeitgleich oder annähernd zeitgleich aufgenommenes Vergleichsbild, das mit einer kürzeren Belichtungszeit aufgenommen wurde, kann hingegen aufgrund der zuvor erläuterten Problematik den Aus-Zustand einer gepulsten Lichtquelle zeigen, obwohl die Lichtquelle eingeschaltet ist.

In solchen Fällen weist das Referenzbild an den Positionen des Bildes, die eine eingeschaltete gepulste Lichtquelle bzw. das von ihr emittierte Licht zeigen, eine sehr viel größere Helligkeit auf als das kürzer belichtete Vergleichsbild, das die eingeschaltete gepulste Lichtquelle in ihrem Aus-Zustand zeigt. Daher werden durch das örtliche Vergleichen der Bilddaten des Vergleichsbildes mit den Bilddaten des Referenzbildes deutliche Abweichungen erkennbar, die über die allein aufgrund der unterschiedlichen Belichtungsdauer zu erwartenden Abweichungen hinausgehen. Dementsprechend weisen auch die normierten Bilddaten örtliche Abweichungen auf, die durch das Vergleichen der normierten Bilddaten erkennbar sind und auf das Vorhandensein flackernder Lichtinformationen hinweisen.

Durch das Ermitteln örtlicher Abweichungen wird somit ermittelt, ob, in welchem Maße und an welchen Positionen Abweichungen zwischen den Bilddaten des Vergleichsbildes und den Bilddaten des Referenzbildes vorhanden sind.

In einem weiteren Schritt des Verfahrens ist vorgesehen, dass in Abhängigkeit der ermittelten örtlichen Abweichungen der Bilddaten eine Fehlermaske generiert wird. Die Fehlermaske zeigt dabei die Fehlerpositionen von Bildfehlern innerhalb des Vergleichsbildes an.

Die Fehlerpositionen von Bildfehlern innerhalb des Vergleichsbildes können sich wiederum beispielsweise auf die Positionen einzelner Pixel im Bild beziehen, wodurch eine besonders hohe Genauigkeit der Fehlermaske erzielt wird. Die Fehlerpositionen können sich aber auch auf die Positionen größerer Bereiche des Bildes, beispielsweise auf die Positionen von Bildblöcken im Bild, beziehen. Hierdurch wird der mit dem Generieren der Fehlermaske verbundene Rechen- und Speicheraufwand verringert. Die Fehlermaske kann grundsätzlich auch lediglich angeben, ob das ganze Bild Fehler enthält oder nicht. Auf diese Weise kann der Rechen- und Speicheraufwand weiter verringert werden. Die Fehlermaske kann somit beispielsweise in pixelgenauer, blockgenauer oder bildgenauer Auflösung generiert werden.

Um ausgehend von den ermittelten örtlichen Abweichungen die Fehlermaske zu generieren, kann insbesondere geprüft werden, ob die ermittelten örtlichen Abweichungen so groß sind, dass anzunehmen ist, dass sie durch eine gepulste Lichtquelle verursacht worden sind. Dies ist insbesondere dann der Fall, wenn die Abweichungen deutlich größer sind als dies allein aufgrund der unterschiedlichen Belichtungsdauern bzw. Lichtempfindlichkeiten des Referenzbildes und des Vergleichsbildes zu erwarten wäre. Sind die örtlichen Abweichungen so groß, dass anzunehmen ist, dass sie durch eine gepulste Lichtquelle verursacht worden sind, so wird die Position der örtlichen Abweichung in der Fehlermaske als Fehlerposition vermerkt. Neben der Belichtungsdauer spielt dabei die Einstellung der Sensor-empfindlichkeit eine Rolle. Bei Sensoren mit unterschiedlichen Zellen für das Referenzbild und das Vergleichsbild spielt deren relative Empfindlichkeit, d. h. das Verhältnis ihrer Empfindlichkeiten zueinander, eine Rolle.

Auf diese Weise wird erreicht, dass die Fehlermaske die Fehlerpositionen von Bildfehlern innerhalb des Vergleichsbildes anzeigt. Wird die Fehlermaske beispielsweise in pixelgenauer Auflösung generiert, wodurch vorteilhaft eine besonders hohe Genauigkeit der Fehlermaske erreicht wird, so kann die Fehlermaske die Position jedes erkannten fehlerhaften Pixels anzeigen. Dabei kann die Fehlermaske beispielsweise so aufgebaut sein, dass sie für sämtliche Pixelpositionen innerhalb des Vergleichsbildes jeweils einen Eintrag umfasst, wobei für jeden Eintrag jeweils durch einen Statusindikator (Flag) angezeigt wird, ob der Pixel fehlerbehaftet ist oder nicht.

Nach dem erfindungsgemäßen Generieren der Fehlermaske ist somit bekannt, an welchen Positionen das mindestens eine Vergleichsbild Bildfehler aufweist, die durch flackernde Lichtinformationen hervorgerufen worden sind. Auf dieser Grundlage ist es möglich, die Bildfehler des Vergleichsbildes zu korrigieren.

Zu diesem Zweck ist es erfindungsgemäß vorgesehen, dass örtliche Korrekturwerte für die Bilddaten des Vergleichsbildes ermittelt werden. Dies kann vorteilhaft insbesondere durch Schätzung erfolgen. Jeder örtliche Korrekturwert ist einer Korrekturposition innerhalb des Vergleichsbildes zugeordnet, wobei die Korrekturpositionen eine pixelgenaue, blockgenaue oder bildgenaue Auflösung aufweisen können. Die Zuordnung des örtlichen Korrekturwerts zu einer Korrekturposition innerhalb des Vergleichsbildes erlaubt die Korrektur eines Bildfehlers des Vergleichsbildes an einer bestimmten Fehlerposition, die der Korrekturposition entspricht.

Zum Ermitteln örtlicher Korrekturwerte durch Schätzung können insbesondere die Bilddaten des Referenzbildes verwendet werden. Eine Verwendung der Bilddaten des Referenzbildes ist diesbezüglich zweckmäßig, da davon ausgegangen werden kann, dass das Vergleichsbild im Falle eines Bildfehlers, der durch eine im Aus-Zustand erfasste gepulste Lichtquelle hervorgerufen wurde, den An-Zustand der gepulsten Lichtquelle zeigt. Hierauf wird später noch näher eingegangen.

Alternativ oder ergänzend hierzu können zum Ermitteln örtlicher Korrekturwerte durch Schätzung insbesondere die Bilddaten anderer Vergleichsbilder verwendet werden, die zu anderen Zeitpunkten, insbesondere zu früheren Zeitpunkten erzeugt wurden als das aktuelle Vergleichsbild, dessen Bildfehler korrigiert werden sollen. Eine Verwendung der Bilddaten anderer Vergleichsbilder ist diesbezüglich zweckmäßig, weil zu anderen Zeitpunkten erzeugte Vergleichsbilder trotz ihrer im Vergleich zum Referenzbild kürzeren Belichtungszeit zufällig den An-Zustand der gepulsten Lichtquelle erfasst haben können. Auch hierauf wird später noch näher eingegangen.

Nach dem erfindungsgemäßen Ermitteln örtlicher Korrekturwerte sind somit örtliche Korrekturwerte bekannt, die jeweils einer Korrekturposition innerhalb des Vergleichsbildes zugeordnet sind und im Bedarfsfall, d. h. sofern die Fehlermaske das Vorhandensein von Bildfehlern innerhalb des Vergleichsbildes anzeigt, zur Korrektur des Vergleichsbildes verwendet werden können.

Zu diesem Zweck ist erfindungsgemäß vorgesehen, dass ein korrigiertes Vergleichsbild erzeugt wird, indem die örtlichen Korrekturwerte an den durch die Fehlermaske angezeigten Fehlerpositionen eingefügt werden. Für die jeweilige durch die Fehlermaske angezeigte Fehlerposition wird dabei der örtliche Korrekturwert verwendet, dessen zugeordnete Korrekturposition der Fehlerposition entspricht. Das jeweilige fehlerhafte Bilddatum des Vergleichsbildes kann auf diese Weise durch den Korrekturwert ersetzt und der Bildfehler so korrigiert werden.

Im Ergebnis steht damit ein korrigiertes Vergleichsbild zur Verfügung, dessen durch flackernde Lichtinformationen hervorgerufene Bildfehler selektiv, d. h. an den von Bildfehlern betroffenen Fehlerpositionen, durch Korrekturwerte korrigiert worden sind. Durch das erfindungsgemäße Verfahren kann somit trotz des Vorhandenseins flackernder Lichtinformationen ein Flicker-reduziertes oder sogar ein vollständig Flicker-befreites Bild bereitgestellt werden.

In einer vorteilhaften Weiterbildung der Erfindung sind die Bilddaten Helligkeitswerte. In diesem Fall werden zum örtlichen Vergleichen der Bilddaten Helligkeitswerte verwendet und/oder die örtlichen Abweichungen der Bilddaten beziehen sich auf Helligkeitswerte und/oder die örtlichen Korrekturwerte beziehen sich auf Helligkeitswerte. Ein Helligkeitswert in diesem Sinne kann beispielsweise der Luminanz- oder Luma-Wert digitaler oder analoger Bilddaten, vorzugsweise digitaler Bilddaten sein.

Helligkeitswerte in diesem Sinne können insbesondere die direkten Farbkomponenten (RGGB) eines Bayer-Sensors sein. Helligkeitswerte in diesem Sinne können aber auch der Wert Y-Wert im YCbCr-Farbmodell oder ein Y-Wert im YUV-Farbmodell sein. Helligkeitswerte in diesem Sinne können auch die Werte der Farbkomponenten R, G und B nach dem Debayering eines Bayer-Sensors sein. Ein Helligkeitswert in diesem Sinne kann aber auch ein anderer Helligkeitswert sein. Die Helligkeitswerte können auch für die Zwecke des erfindungsgemäßen Verfahrens aus den Rohdaten der Bilder der eingelesenen Belichtungsreihe berechnet werden, beispielsweise aus solchen Rohdaten, wie sie ein Bildsensor an seiner Ausgangsschnittstelle bereitstellt.

Die Verwendung von Helligkeitswerten als Bilddaten für die Zwecke des erfindungsgemäßen Verfahrens bietet den Vorteil, dass es auf Grundlage der Helligkeitswerte besonders einfach möglich ist, durch flackernde Lichtinformationen hervorgerufene Bildfehler zu erkennen und zu korrigieren. Dies liegt darin begründet, dass sich der Wechsel einer Lichtquelle von einem An-Zustand in einen Aus-Zustand oder eine Änderung der Helligkeit der Lichtquelle unmittelbar in den Helligkeitswerten und damit in den Bilddaten niederschlägt.

In einer weiteren vorteilhaften Weiterbildung der Erfindung ist der Bildsensor ein High-Dynamic-Range-Bildsensor, kurz HDR-Bildsensor, und die Belichtungsreihe ist eine vom dem HDR-Bildsensor erzeugte High-Dynamic-Range-Belichtungsreihe, kurz HDR-Belichtungsreihe.

HDR-Bildsensoren sind in der Lage, durch Mehrfachbelichtung eine HDR-Belichtungsreihe zu erzeugen, die mehrere zeitgleich, z. B. bei Verwendung eines Split-Pixel-Sensors, oder in sehr kurzen zeitlichen Abständen erzeugte Bilder umfasst, sodass die Bilder dieselbe Szene im Sinne der vorliegenden Erfindung zeigen. Die Bilder einer HDR-Belichtungsreihe werden dabei vom HDR-Bildsensor mit unterschiedlich langen Belichtungszeiten aufgenommen, um eine im Vergleich zu einem Einzelbild größere Helligkeitsdynamik bereitstellen zu können.

Diese Funktionalität eines HDR-Bildsensors kann vorteilhaft dazu genutzt werden, die zur Durchführung des erfindungsgemäßen Verfahrens benötigte Belichtungsreihe bereitzustellen. Die Verwendung eines HDR-Bildsensors, der eine HDR-Belichtungsreihe erzeugt, bietet den Vorteil, dass auf schnelle und automatisierte Weise mehrere Bilder derselben Szene mit unterschiedlich langer Belichtungszeit bereitgestellt und als Referenzbild bzw. Vergleichsbild im Sinne der vorliegenden Anmeldung verwendet werden können.

Der HDR-Bildsensor kann dabei insbesondere ein Split-Pixel-Sensor sein. Bildsensoren weisen üblicherweise eine Vielzahl von Sensorzellen (kurz als Zellen bezeichnet) auf, wobei jede Sensorzelle für die Erzeugung eines Pixels eines zu erzeugenden Bildes verantwortlich ist. Während herkömmliche Bildsensoren lediglich eine Sensorzelle pro Pixel aufweisen, hat ein Split-Pixel-Sensor mindestens zwei Sensorzellen pro Pixel, wobei die verschiedenen Sensorzellen jedes Pixels zur Erzeugung verschiedener Bilder der HDR-Belichtungsreihe verwendet werden.

Auf diese Weise ist es beispielsweise möglich, dass ein Split-Pixel-Sensor jeden Pixel des Referenzbildes unter Verwendung jeweils der ersten Sensorzelle und jeden Pixel des mindestens einen Vergleichsbildes unter Verwendung jeweils der zweiten Sensorzelle erzeugt.

Die Lichtempfindlichkeiten (auch als Sensorempfindlichkeiten oder einfach als Empfindlichkeiten bezeichnet) der mindestens zwei Sensorzellen jedes Pixels eines Split-Pixel-Sensors können sich dabei unterscheiden. Beispielsweise kann der Split-Pixel-Sensor pro Pixel eine Sensorzelle mit geringerer Lichtempfindlichkeit und eine Sensorzelle mit höherer Lichtempfindlichkeit aufweisen. Üblicherweise erzeugen derartige Split-Pixel-Sensoren ein helleres Bild mit einer längeren Belichtungszeit, d. h. ein Referenzbild im Sinne der vorliegenden Erfindung, unter Verwendung der Sensorzellen mit größerer Lichtempfindlichkeit und ein dunkleres Bild mit einer kürzeren Belichtungszeit, d. h. ein Vergleichsbild im Sinne der vorliegenden Erfindung, unter Verwendung der Sensorzellen geringerer Lichtempfindlichkeit. Derartige Split-Pixel-Sensoren weisen somit zwei Arten von Sensorzellen zum Erzeugen der Bilder der Belichtungsreihe auf, wobei die Lichtempfindlichkeit der Sensorzellen einer ersten Art größer ist als die Lichtempfindlichkeit der Sensorzellen einer zweiten Art.

Dabei kann insbesondere auswählbar sein, mit welcher Art der Sensorzellen das jeweilige Bild der Belichtungsreihe erzeugt wird. Auf diese Weise kann beispielsweise ausgewählt werden, ob das Referenzbild mit den Sensorzellen größerer Empfindlichkeit oder den Sensorzellen geringerer Empfindlichkeit erzeugt wird und ob das mindestens eine Vergleichsbild mit den Sensorzellen größerer Empfindlichkeit oder den Sensorzellen geringerer Empfindlichkeit erzeugt wird. Somit sind derartige Bildsensoren dazu eingerichtet, die Bilder der Belichtungsreihe mit einer auswählbaren Lichtempfindlichkeit zu erzeugen.

In einer weiteren vorteilhaften Weiterbildung der Erfindung ist vorgesehen, dass der Bildsensor, der die Bilder der Belichtungsreihe erzeugt, dazu eingerichtet ist, die Bilder der Belichtungsreihe mit einer auswählbaren Lichtempfindlichkeit zu erzeugen. Die Lichtempfindlichkeit ist dabei mindestens auswählbar ist zwischen einer ersten Lichtempfindlichkeit und einer zweiten Lichtempfindlichkeit, wobei die zweite Lichtempfindlichkeit geringer ist als die erste Lichtempfindlichkeit. Dabei umfasst das Verfahren einen zusätzlichen Schritt des Erzeugens der Belichtungsreihe mit dem Bildsensor, wobei zumindest das Referenzbild mit der zweiten Lichtempfindlichkeit erzeugt wird. Das Referenzbild wird somit mit einer geringeren Lichtempfindlichkeit erzeugt.

Dies bietet den Vorteil, dass eine lange Belichtungsdauer des Referenzbildes gewählt werden kann, ohne dass in den hellen Bereichen der Szene die Bilddaten des Referenzbildes bereits den Bereich der Sättigung erreichen und ein unerwünschter Verlust des Dynamikumfangs eintritt. Durch die lange Belichtungsdauer kann vorteilhaft die Wahrscheinlichkeit erhöht werden, dass das Referenzbild zumindest teilweise den An-Zustand der gepulsten Lichtquelle zeigt, während das mit kürzerer Belichtungszeit aufgenommene Vergleichsbild den Aus-Zustand derselben gepulsten Lichtquelle zeigt. Auf diese Weise wird vorteilhaft die Zuverlässigkeit verbessert, mit der flackernde Lichtinformationen und dadurch hervorgerufene Bildfehler erkannt und korrigiert werden können.

In einer weiteren vorteilhaften Weiterbildung der Erfindung ist ebenfalls vorgesehen, dass der Bildsensor, der die Bilder der Belichtungsreihe erzeugt, dazu eingerichtet ist, die Bilder der Belichtungsreihe mit einer auswählbaren Lichtempfindlichkeit zu erzeugen. Die Lichtempfindlichkeit ist dabei wiederum mindestens auswählbar zwischen einer ersten Lichtempfindlichkeit und einer zweiten Lichtempfindlichkeit, wobei die zweite Lichtempfindlichkeit geringer ist als die erste Lichtempfindlichkeit. Das Verfahren umfasst gemäß dieser vorteilhaften Weiterbildung zwei zusätzliche Schritte.

In einem zusätzlichen Schritt ist ein Auswählen der Lichtempfindlichkeit vorgesehen, mit welcher das Referenzbild erzeugt wird. Das Auswählen erfolgt dabei in Abhängigkeit der Helligkeit der Szene, d. h. der Helligkeit des Ausschnitts der sichtbaren Umgebung des Bildsensors. Bei geringerer Helligkeit der Szene wird erfindungsgemäß die erste Lichtempfindlichkeit, d. h. eine höhere Lichtempfindlichkeit, und bei größerer Helligkeit der Szene die zweite Lichtempfindlichkeit, d. h. eine geringere Lichtempfindlichkeit, ausgewählt. Darüber hinaus kann auch ein Auswählen der Lichtempfindlichkeit erfolgen, mit der das mindestens eine Vergleichsbild erzeugt wird. In einem weiteren zusätzlichen Schritt erfolgt das Erzeugen der Belichtungsreihe mit dem Bildsensor, wobei zumindest das Referenzbild mit der im zuvor erläuterten Schritt ausgewählten Lichtempfindlichkeit erzeugt wird.

Diese erfindungsgemäße Weiterbildung des Verfahrens bietet den Vorteil, dass bei einer vergleichsweise hellen Szene eine lange Belichtungsdauer des Referenzbildes gewählt werden kann, ohne dass in den hellen Bereichen der Szene die Bilddaten des Referenzbildes bereits den Bereich der Sättigung erreichen und ein unerwünschter Verlust des Dynamikumfangs eintritt. Auf diese Weise können im Falle einer vergleichsweise hellen Szene die zuvor bereits erläuterten Vorteile einer längeren Belichtungszeit des Referenzbildes erzielt werden. Im Falle einer vergleichsweise dunklen Szene kann hingegen eine lange Belichtungsdauer des Referenzbildes auch in Verbindung mit einer größeren Empfindlichkeit realisiert werden, ohne dass die Bilddaten des Referenzbildes den Bereich der Sättigung erreichen. Die Verwendung einer größeren Empfindlichkeit für das Referenzbild ist für vergleichsweise dunkle Szenen von Vorteil, da hierdurch unerwünschtes Bildrauschen, das bei einer Erzeugung des Bildes mit geringerer Lichtempfindlichkeit auftreten könnte, vermieden werden kann. Durch ein Auswählen der Lichtempfindlichkeit, mit der das Referenzbild der Belichtungsreihe erzeugt wird, in der zuvor beschriebenen Weise können somit die Vorteile einer geringeren Lichtempfindlichkeit für hellere Szenen und jene einer größeren Lichtempfindlichkeit für dunklere Szenen verbunden werden.

In einer weiteren vorteilhaften Weiterbildung der Erfindung kann der Bildsensor ein HDR-Bildsensor sein, der als Split-Pixel-Sensor ausgebildet ist und mindestens zwei Arten von Sensorzellen zum Erzeugen der Bilder der HDR-Belichtungsreihe aufweist, wobei die Lichtempfindlichkeit der Sensorzellen einer ersten Art größer ist als die Lichtempfindlichkeit der Sensorzellen einer zweiten Art. Das Verfahren umfasst gemäß dieser Weiterbildung einen zusätzlichen Schritt des Erzeugens der HDR-Belichtungsreihe mit dem HDR-Bildsensor, wobei zumindest das Referenzbild durch die Sensorzellen der zweiten Art erzeugt wird.

Split-Pixel-Sensoren, die pro Pixel eine Sensorzelle geringer Lichtempfindlichkeit und eine Sensorzelle größerer Lichtempfindlichkeit umfassen, erzeugen üblicherweise ein helleres Bild mit einer längeren Belichtungszeit, d. h. ein Referenzbild im Sinne der vorliegenden Erfindung, unter Verwendung der Sensorzellen mit größerer Lichtempfindlichkeit und ein dunkleres Bild mit einer kürzeren Belichtungszeit, d. h. ein Vergleichsbild im Sinne der vorliegenden Erfindung, unter Verwendung der Sensorzellen geringerer Lichtempfindlichkeit. Erfindungsgemäß wird somit vorgeschlagen, dass diese Zuordnung umgekehrt wird und zur Erzeugung des Referenzbildes die Sensorzellen geringerer Empfindlichkeit verwendet werden.

Dies bietet wiederum den Vorteil, dass eine lange Belichtungsdauer des Referenzbildes gewählt werden kann, ohne dass in den hellen Bereichen der Szene die Bilddaten des Referenzbildes den Bereich der Sättigung erreichen und ein unerwünschter Verlust des Dynamikumfangs eintritt. Auf diese Weise können die zuvor bereits erläuterten Vorteile einer längeren Belichtungszeit des Referenzbildes erzielt werden.

In einer weiteren vorteilhaften Weiterbildung der Erfindung kann der Bildsensor ein HDR-Bildsensor sein, der als Split-Pixel-Sensor ausgebildet ist und mindestens zwei Arten von Sensorzellen zum Erzeugen der Bilder der HDR-Belichtungsreihe aufweist und des Weiteren dazu eingerichtet ist, jedes Bild der HDR-Belichtungsreihe durch eine auswählbare Art der Sensorzellen zu erzeugen. Die Lichtempfindlichkeit der Sensorzellen einer ersten Art ist dabei wiederum größer als die Lichtempfindlichkeit der Sensorzellen einer zweiten Art. Das erfindungsgemäße Verfahren umfasst gemäß dieser vorteilhaften Weiterbildung zwei zusätzliche Schritte.

In einem zusätzlichen Schritt ist ein Auswählen zumindest der Art der Sensorzellen, mit denen das Referenzbild erzeugt wird, vorgesehen. Das Auswählen erfolgt dabei wiederum in Abhängigkeit der Helligkeit der Szene, wobei die erste Art der Sensorzellen, d. h. die Sensorzellen mit größerer Lichtempfindlichkeit, bei geringerer Helligkeit der Szene und die zweite Art der Sensorzellen, d. h. die Sensorzellen mit geringer Lichtempfindlichkeit, bei größerer Helligkeit der Szene ausgewählt wird. Darüber hinaus kann auch ein Auswählen der Lichtempfindlichkeit erfolgen, mit der das mindestens eine Vergleichsbild erzeugt wird. In einem weiteren zusätzlichen Schritt erfolgt das Erzeugen der HDR-Belichtungsreihe mit dem HDR-Bildsensor, wobei zumindest das Referenzbild durch die ausgewählte Art der Sensorzellen erzeugt wird.

Erfindungsgemäß wird somit vorgeschlagen, dass die zuvor beschriebene, für - Pixel-Sensoren übliche Zuordnung zwischen den Bildern der Belichtungsreihe und den Arten der Sensorzellen nur im Falle einer vergleichsweise hellen Szene umgekehrt wird, sodass nur im Falle einer vergleichsweise hellen Szene zur Erzeugung des Referenzbildes die Sensorzellen geringerer Empfindlichkeit verwendet werden.

Durch diese vorteilhafte Weiterbildung des erfindungsgemäßen Verfahrens ist es bei einem Split-Pixel-Sensor der zuvor beschriebenen Art vorteilhaft möglich, das Referenzbild im Falle einer hellen Szene mit einer geringeren Lichtempfindlichkeit und im Falle einer dunklen Szene mit einer höheren Lichtempfindlichkeit zu erzeugen. Dadurch können bei Verwendung eines solchen Split-Pixel-Sensors zur Erzeugung der Belichtungsreihe die Vorteile einer geringeren Lichtempfindlichkeit für hellere Szenen, nämlich insbesondere eine längere Belichtungszeit, und jene einer größeren Lichtempfindlichkeit für dunklere Szenen, nämlich insbesondere ein Vermeiden von Bildrauschen, in der zuvor beschriebenen Weise kombiniert werden.

Zum Ermitteln der örtlichen Abweichungen werden in einer weiteren vorteilhaften Weiterbildung der Erfindung die Bilddaten normiert und es werden die normierten Bilddaten an einer Position des Vergleichsbildes mit den normierten Bilddaten an derselben Position des Referenzbildes verglichen. Um die normierten Bilddaten zu vergleichen, kann dabei insbesondere eine Differenz ermittelt werden zwischen den normierten Bilddaten an einer Position des Vergleichsbildes und den normierten Bilddaten an derselben Position des Referenzbildes.

Aufgrund der längeren Belichtungszeit des Referenzbildes weichen die Bilddaten des Referenzbildes grundsätzlich von den Bilddaten des Vergleichsbildes ab, obwohl beide Bilder dieselbe Szene zeigen. Insbesondere weist das Referenzbild wegen seiner längeren Belichtungszeit im Vergleich zu dem Vergleichsbild eine größere Helligkeit auf. Um örtliche Abweichungen zwischen den Bilddaten des Vergleichsbildes und den Bilddaten des Referenzbildes zu ermitteln, ist daher eine Normierung der Bilddaten zweckmäßig.

Die Normierung der Bilddaten kann sich dabei beispielsweise auf eine absolute Helligkeit und/oder eine bestimmte Belichtungszeit beziehen. Bei der Normierung der Bilddaten können die bei der Erzeugung des jeweiligen Bildes gewählten Belichtungsparameter und Betriebskenngrößen des Bildsensors, beispielsweise die Belichtungszeit, die Empfindlichkeit, die Blendenzahl und/oder die Reaktionskurve (camera response curve) des Bildsensors, berücksichtigt werden.

Sind beispielsweise die Belichtungsparameter und Betriebskenngrößen des Bildsensors mit Ausnahme der Belichtungszeit für sämtliche Bilder der Belichtungsreihe gleich, so kann anhand der jeweiligen Belichtungszeit eine Normierung der Bilder der Belichtungsreihe auf eine beliebig wählbare Bezugsbelichtungszeit vorgenommen werden. Umfasst die Belichtungsreihe beispielsweise ein Referenzbild L mit einer Belichtungszeit $T_L$, ein Vergleichsbild S mit einer Belichtungszeit $T_S=T_L/4$ und ein weiteres Vergleichsbild VS mit einer Belichtungszeit $T_{VS} = T_L/16$ und wird als Bezugsbelichtungszeit die Belichtungszeit $T_L$ gewählt, so können als Helligkeitswerte vorliegende Bilddaten auf die Bezugsbelichtungszeit normiert werden, indem die Helligkeitswerte des Vergleichsbildes S mit vier multipliziert und die Helligkeitswerte des Vergleichsbildes VS mit sechzehn multipliziert werden.

Nach der Normierung der Bilddaten sind diese unmittelbar vergleichbar, sodass zum Ermitteln der örtlichen Abweichungen insbesondere eine Differenz ermittelt werden kann zwischen den normierten Bilddaten an einer Position des Vergleichsbildes und den normierten Bilddaten an derselben Position des Referenzbildes. Die Differenz zwischen den normierten Bilddaten an einer bestimmten Position kann auf diese Weise die örtlichen Abweichungen quantifizieren.

Die Positionen der normierten Bilddaten können dabei wiederum in pixelgenauer, blockgenauer oder bildgenauer Auflösung ermittelt werden. Vorteilhaft kann eine Differenz zwischen den normierten Bilddaten des Referenzbildes und des Vergleichsbildes auf Basis pixelgenauer Positionen für jeden einzelnen Pixel der Bilder ermittelt werden. Auf diese Weise wird eine besonders hohe Genauigkeit der ermittelten örtlichen Abweichungen erzielt. Durch die Differenz der Bilddaten an einer bestimmten Pixelposition kann somit die örtliche Abweichung an der Pixelposition exakt quantifiziert werden.

In einer weiteren vorteilhaften Weiterbildung der Erfindung wird zur Normierung der Bilddaten ein relatives Lichtempfindlichkeitsverhältnis zwischen der Lichtempfindlichkeit des Referenzbildes und der Lichtempfindlichkeit des Vergleichsbildes verwendet. Alternativ oder ergänzend hierzu kann zur Normierung der Bilddaten ein Belichtungszeitverhältnis zwischen der Belichtungszeit des Referenzbildes und der Belichtungszeit des Vergleichsbildes verwendet werden. Unter einem relativen Lichtempfindlichkeitsverhältnis wird dabei ein Verhältnis einer Lichtempfindlichkeit eines Bildes zu einer Lichtempfindlichkeit eines anderen Bildes verstanden. Unter einem Belichtungszeitverhältnis wird dabei ein Verhältnis einer Belichtungszeit eines Bildes zu einer Belichtungszeit eines anderen Bildes verstanden.

In einer weiteren vorteilhaften Weiterbildung der Erfindung werden zum Generieren der Fehlermaske die ermittelten örtlichen Abweichungen der Bilddaten mit einem Schwellenwert verglichen. Übersteigen die örtlichen Abweichungen den Schwellenwert, so kann davon ausgegangen werden, dass an der Position der örtlichen Abweichung ein durch flackernde Lichtinformationen hervorgerufener Bildfehler vorliegt. Die Position der örtlichen Abweichung kann in diesem Fall in der Fehlermaske als fehlerhaft eingetragen oder markiert werden, sodass auf diese Weise die Fehlerposition des Bildfehlers innerhalb des Vergleichsbildes angezeigt wird.

Das Vergleichen mit einem Schwellenwert bietet dabei den Vorteil, dass das Generieren der Fehlermaske auf diese Weise mit geringem Rechenaufwand realisiert werden kann.

Zum Ermitteln örtlicher Korrekturwerte für die Bilddaten des Vergleichsbildes durch Schätzung können beispielsweise die Bilddaten des Referenzbildes verwendet werden. Zur Korrektur von Bildfehlern, die durch eine im Aus-Zustand erfasste gepulste Lichtquelle hervorgerufen wurden, ist eine Verwendung der Bilddaten des Referenzbildes zweckmäßig, da davon ausgegangen werden kann, dass das Referenzbild wegen seiner längeren Belichtungszeit den An-Zustand der gepulsten Lichtquelle zeigt. Aufgrund der längeren Belichtungszeit weisen die Bilddaten des Referenzbildes jedoch im Allgemeinen eine größere Helligkeit auf als die Bilddaten des Vergleichsbildes, sodass die Bilddaten des Referenzbildes nicht unmittelbar als Korrekturwerte für die Bilddaten des Vergleichsbildes verwendet werden können.

In einer weiteren vorteilhaften Weiterbildung der Erfindung ist daher insbesondere vorgesehen, dass zum Ermitteln der örtlichen Korrekturwerte für die Bilddaten des Vergleichsbildes eine einfache Schätzung angewendet wird, die auf den Bilddaten des Referenzbildes sowie dem Verhältnis zwischen der Belichtungszeit des Referenzbildes und der Belichtungszeit des Vergleichsbildes beruht.

Zur Ermittlung eines örtlichen Korrekturwerts, der einer bestimmten Korrekturposition innerhalb des Vergleichsbildes zugeordnet ist, wird dabei auf das Bilddatum, beispielsweise einen Helligkeitswert, an der Position des Referenzbildes zurückgegriffen, die der Korrekturposition entspricht. Ist das Verhältnis zwischen der Belichtungszeit des Referenzbildes und der Belichtungszeit des Vergleichsbildes bekannt, so kann aus dem Helligkeitswert des Referenzbildes und dem Verhältnis der Belichtungszeiten eine Schätzung des korrespondierenden Helligkeitswerts des kürzer belichteten Vergleichsbildes berechnet werden, um diese als Korrekturwert zu verwenden. Umfasst die Belichtungsreihe beispielsweise ein Referenzbild L mit einer Belichtungszeit $T_L$ und ein Vergleichsbild S mit einer Belichtungszeit $T_S = T_L/4$, so kann der Helligkeitswert des Referenzbildes durch vier geteilt und dieser Wert als örtlicher Korrekturwert für die Bilddaten des Vergleichsbildes an der zugeordneten Korrekturposition verwendet werden.

Problematisch ist dabei jedoch, dass in den hellen Bereichen der Szene die Bilddaten des Referenzbildes aufgrund der langen Belichtungsdauer bereits den Bereich der Sättigung erreicht haben können, d. h. die Bilddaten des Referenzbildes können infolge einer Übersteuerung des Bildsensors unerwünschte Clipping-Effekte aufweisen. Dies betrifft insbesondere gerade diejenigen Bereiche der Szene, die durch eine gepulste Lichtquelle emittierte flackernde Lichtinformationen enthalten, da diese Bereiche sehr hell sind. Vorteilhaft kann daher bei der Schätzung des örtlichen Korrekturwerts aus dem Verhältnis zwischen der Belichtungszeit des Referenzbildes und der Belichtungszeit des Vergleichsbildes ein zusätzlicher Korrekturfaktor angewendet werden. Der Wert des zusätzlichen Korrekturfaktors kann dabei beispielsweise anhand der Bilddaten aus der die Korrekturposition umgebenden Umgebung des Referenzbildes geschätzt werden. Haben die Bilddaten des Referenzbildes in einer großen Umgebung um die Korrekturposition bereits den Bereich der Sättigung erreicht, so liegt es nahe, einen großen zusätzlichen Korrekturfaktor zu wählen.

Die Methode einer einfachen Schätzung, die auf dem Verhältnis zwischen der Belichtungszeit des Referenzbildes und der Belichtungszeit des Vergleichsbildes beruht, bietet den Vorteil, dass sich die örtlichen Korrekturwerte mit sehr geringem Rechen- und Speicheraufwand bestimmen lassen.

In der Erfindung ist hierzu vorgesehen, dass zum Ermitteln der örtlichen Korrekturwerte für die Bilddaten des Vergleichsbildes eine Schätzung angewendet wird, die auf den Bilddaten einer in einem Datenspeicher vorgehaltenen Vergleichsbildzeitreihe beruht. Die Vergleichsbildzeitreihe umfasst dabei eine Anzahl gespeicherter Bilder, die mit der gleichen Belichtungszeit wie das Vergleichsbild zu anderen Zeitpunkten als das Vergleichsbild von dem Bildsensor erzeugt wurden. Die gespeicherten Bilder der Vergleichsbildzeitreihe können insbesondere zu früheren Zeitpunkten als das Vergleichsbild von dem Bildsensor erzeugt worden sein. Vorteilhaft können sich des Weiteren die Zeitpunkte, zu denen die verschiedenen gespeicherten Bilder der Vergleichszeitreihe von dem Bildsensor erzeugt worden sind, voneinander unterscheiden. Der Datenspeicher kann insbesondere ein Ringspeicher sein, in welchem, wenn der Datenspeicher voll und/oder eine festgelegte Anzahl gespeicherter Bilder erreicht ist, jeweils das älteste gespeicherte Bild durch ein neues gespeichertes Bild ersetzt wird.

Die Vergleichsbildzeitreihe, die zum Ermitteln der örtlichen Korrekturwerte für die Bilddaten des Vergleichsbildes genutzt wird, kann außerdem eine unveränderte Kopie oder eine veränderte Kopie des aktuellen, d. h. zuletzt eingelesenen Vergleichsbildes selbst umfassen.

Die Vergleichsbildzeitreihe kann beispielsweise 30 gespeicherte Bilder umfassen. Die Zeitpunkte, zu denen die gespeicherten Bilder von dem Bildsensor erzeugt worden sind, können voneinander verschiedene Zeitpunkte, insbesondere zeitlich unmittelbar oder mittelbar aufeinanderfolgende Zeitpunkte sein. Zwischen den Zeitpunkten können dabei insbesondere Zeitschritte einer bestimmten Länge liegen.

Die gespeicherten Bilder der Vergleichsbildzeitreihe können insbesondere Kopien der Vergleichsbilder aus zu früheren Zeitpunkten zur Durchführung des erfindungsgemäßen Verfahrens eingelesenen Belichtungsreihen in unveränderter oder veränderter Form sein. Insbesondere kann eine unveränderte oder veränderte Kopie des Vergleichsbildes der eingelesenen Belichtungsreihe nach dem Einlesen der Belichtungsreihe in dem Datenspeicher gespeichert werden. Im Falle eines Ringspeichers kann dieses neu hinzugekommene Vergleichsbild dann das älteste bisher gespeicherte Bild der Vergleichsbildzeitreihe ersetzen, wenn der Datenspeicher voll ist und/oder eine festgelegte Anzahl gespeicherter

EP 3 809 691 B1

Bilder erreicht ist.

Auf diese Weise wird in dem Datenspeicher eine Vergleichsbildzeitreihe bereitgestellt, die zeitlich aufeinanderfolgende Bilder umfasst, die von dem Bildsensor mit der gleichen Belichtungszeit erzeugt wurden wie ein aktuelles Vergleichsbild, dessen Bildfehler mit Hilfe der örtlichen Korrekturwerte korrigiert werden sollen.

Die Anwendung einer Schätzung, die auf den Bilddaten einer solchen in einem Datenspeicher vorgehaltenen Vergleichsbildzeitreihe beruht, ist zum Ermitteln der örtlichen Korrekturwerte für die Bilddaten des Vergleichsbildes zweckmäßig, da zu anderen Zeitpunkten erzeugte Vergleichsbilder trotz ihrer im Vergleich zum Referenzbild kürzeren Belichtungszeit zufällig den An-Zustand der gepulsten Lichtquelle erfasst haben können. Wird die Anzahl der gespeicherten Bilder der Vergleichsbildzeitreihe groß genug gewählt, kann angenommen werden, dass mindestens eines der gespeicherten Bilder der Vergleichsbildzeitreihe den An-Zustand der gepulsten Lichtquelle erfasst hat.

Aus den Bilddaten eines oder mehrerer gespeicherter Bilder der Vergleichsbildzeitreihe, das bzw. die den An-Zustand der gepulsten Lichtquelle erfasst hat bzw. haben, kann daher ein geeigneter örtlicher Korrekturwert für die Bilddaten des Vergleichsbildes ermittelt werden. Liegen die Bilddaten beispielsweise in Form von Helligkeitswerten vor, so kann beispielsweise der Helligkeitswert eines gespeicherten Bildes, das den An-Zustand der gepulsten Lichtquelle erfasst hat, als Korrekturwert übernommen werden.

Die Anwendung einer Schätzung zum Ermitteln der örtlichen Korrekturwerte für die Bilddaten des Vergleichsbildes, die auf den Bilddaten einer in einem Datenspeicher vorgehaltenen Vergleichsbildzeitreihe der beschriebenen Art beruht, bietet den Vorteil, dass eine besonders genaue Ermittlung der örtlichen Korrekturwerte möglich ist. Dies liegt darin begründet, dass die gespeicherten Bilder der Vergleichsbildzeitreihe mit der gleichen Belichtungszeit wie das Vergleichsbild erzeugt wurden, sodass die Bilddaten der gespeicherten Bilder eine zur Belichtungszeit des Vergleichsbildes passende Helligkeit aufweisen.

In einer weiteren vorteilhaften Weiterbildung der Erfindung ist vorgesehen, dass die Bilder der Vergleichsbildzeitreihe vor dem Speichern in dem Datenspeicher einer Dilatation unterzogen werden und/oder durch Downscaling verkleinert werden und/oder komprimiert werden. Die genannten Operationen können dabei in beliebiger Reihenfolge und auch mehrfach zum Einsatz kommen. So kann beispielsweise zunächst ein Downscaling durchgeführt werden, anschließend eine Dilatation und anschließend ein erneutes Downscaling. Dadurch können vorteilhaft sowohl der mit der Dilatation verbundene Rechenaufwand als auch die Größe des für das Speichern der Bilder notwendigen Datenspeichers verringert werden.

Gespeichert werden in diesen Fällen demnach nicht unveränderte Kopien, sondern durch Dilatation und/oder Downscaling und/oder Komprimierung veränderte Kopien von Bildern, die zu anderen Zeitpunkten als das Vergleichsbild von dem Bildsensor erzeugt wurden. Die Bilder werden in diesem Sinne in veränderter Form gespeichert. Insbesondere können die gespeicherten Bilder der Vergleichsbildzeitreihe vorteilhaft dadurch bereitgestellt werden, dass nach dem Einlesen der Belichtungsreihe eine in der genannten Weise veränderte Kopie des Vergleichsbildes der eingelesenen Belichtungsreihe in dem Datenspeicher gespeichert wird.

Der Begriff der Dilatation ist dabei im Sinne der Bildverarbeitung zu verstehen. Durch die Dilatation werden bestimmte Bereiche des Bildes aufgeweitet, d. h. dilatiert. Vorteilhaft ist es erfindungsgemäß insbesondere möglich, helle Bereiche des Bildes durch eine Dilatation aufzuweiten. Die Aufweitung heller Bereiche bietet den Vorteil, dass auf diese Weise die Qualität der örtlichen Korrekturwerte, die auf Grundlage der gespeicherten Bilder der Vergleichsbildzeitreihe ermittelt werden, verbessert werden kann, da Bilddaten mit großer Helligkeit von besonderer Relevanz für die Korrektur von Bildfehlern sind, die durch flackernde Lichtinformationen hervorgerufen werden.

Dieser Vorteil kommt insbesondere dann zur Geltung, wenn sich im Zeitverlauf eine gepulste Lichtquelle bzw. die von ihr emittierten flackernden Lichtinformationen relativ zu dem Bildsensor bewegen, beispielsweise durch Bewegung der gepulsten Lichtquelle und/oder des Bildsensors. Wird unter diesen Umständen ein örtlicher, einer bestimmten Korrekturposition zugeordneter Korrekturwert für die Bilddaten des Vergleichsbildes in den Bilddaten der gespeicherten Bilder gesucht, so kann es dazu kommen, dass aufgrund der Bewegung der passende (helle) Korrekturwert innerhalb des gespeicherten Bildes nicht an der Korrekturposition, sondern in der Umgebung dieser Position zu finden ist. Werden die für die Korrektur der Bildfehler relevanten hellen Bereiche innerhalb der gespeicherten Bilder durch Dilatation aufgeweitet, so kann dieser Effekt kompensiert werden.

Vorteilhaft können die Bilder der Vergleichsbildzeitreihe des Weiteren vor dem Speichern in dem Datenspeicher durch Downscaling verkleinert werden. Das Downscaling kann dabei insbesondere ein Subsampling und/oder Downsampling und/oder eine Unterabtastung umfassen. Ein Downscaling der Bilder vor dem Speichern bietet den Vorteil, dass der für das Vorhalten der Vergleichsbilder benötigte Speicherplatz auf einfache Weise verringert werden kann.

Vorteilhaft können die Bilder der Vergleichsbildzeitreihe außerdem vor dem Speichern in dem Datenspeicher komprimiert werden. Ein Komprimieren der Bilder vor dem Speichern bietet den Vorteil, dass der für das Vorhalten der Vergleichsbilder benötigte Speicherplatz besonders effektiv verringert werden kann.

In einer weiteren vorteilhaften Weiterbildung der Erfindung ist vorgesehen, dass die Bilddaten der gespeicherten Bilder der Vergleichsbildzeitreihe in Bezug auf das Vergleichsbild bewegungskompensiert sind. Die Bilder der Vergleichsbildzeitreihe werden demnach in bewegungskompensierter Form in dem Datenspeicher gespeichert. Vorteilhaft kann alternativ oder ergänzend hierzu vor dem Ermitteln der örtlichen Korrekturwerte für die Bilddaten des Vergleichsbildes eine Bewegungskompensation der Bilddaten der gespeicherten Bilder der Vergleichsbildzeitreihe in Bezug auf das Vergleichsbild durchgeführt werden. Die Bewegungskompensation der Bilddaten der Bilder der Vergleichsbildzeitreihe kann somit vor und/oder nach dem Speichern der Bilder in dem Datenspeicher erfolgen. In analoger Art und Weise kann auch das Vergleichsbild vor dem Ermitteln der örtlichen Korrekturwerte in Bezug auf die Bilder der Vergleichsbildzeitreihe bewegungskompensiert werden. Die Bewegungskompensation (Motion Compensation) kann insbesondere auf einer Bewegungsschätzung (Motion Estimation) auf Basis von Bewegungsvektoren beruhen.

Die Anwendung einer Bewegungskompensation ist aufgrund der Tatsache zweckmäßig, dass sich die Zeitpunkte, zu denen die gespeicherten Bilder der Vergleichsbildzeitreihe von dem Bildsensor erzeugt worden sind, von dem Zeitpunkt unterscheiden, zu dem das mindestens eine Vergleichsbild der eingelesenen Belichtungsreihe erzeugt worden ist. Darüber hinaus können sich auch die Zeitpunkte, zu denen die verschiedenen gespeicherten Bilder der Vergleichszeitreihe von dem Bildsensor erzeugt worden sind, voneinander unterscheiden.

Relativbewegungen eines Objektes zwischen den mit den verschiedenen Bildern erfassten Szenen können aufgrund der unterschiedlichen Bilderzeugungszeitpunkte dazu führen, dass das mindestens eine Vergleichsbild und die verschiedenen Bilder der Vergleichsbildzeitreihe das sich bewegende Objekt in verschiedenen Positionen zeigen. Ein solches sich bewegendes Objekt kann beispielsweise eine gepulste Lichtquelle sein, die das Vergleichsbild im Aus-Zustand zeigt, obwohl die gepulste Lichtquelle tatsächlich eingeschaltet ist. In diesem Fall wird mit Hilfe des erfindungsgemäßen Verfahrens innerhalb des Vergleichsbildes eine Anzahl von Bildfehlern an zugeordneten Fehlerpositionen erkannt, die mit Hilfe örtlicher Korrekturwerte korrigiert werden müssen. Die Genauigkeit der örtlichen Korrekturwerte, die aus den gespeicherten Bildern der Vergleichsbildzeitreihe ermittelt werden, kann dabei durch die Relativbewegung der gepulsten Lichtquelle beeinträchtigt werden, da es dazu kommen kann, dass die gespeicherten Bilder der Vergleichsbildzeitreihe die gepulste Lichtquelle aufgrund der Bewegung nicht an der Fehlerposition, sondern an einer zur Fehlerposition versetzten Position zeigen.

Die Anwendung einer Bewegungskompensation zwischen den gespeicherten Bildern der Vergleichsbildzeitreihe einerseits und dem Vergleichsbild, dessen Bildfehler korrigiert werden sollen, anderseits hat daher den Vorteil, dass durch die Bewegungskompensation die negativen Auswirkungen von Relativbewegungen ausgeglichen werden können und die Genauigkeit der örtlichen Korrekturwerte, die anhand einer Schätzung aus den gespeicherten Bildern der Vergleichsbildzeitreihe ermittelt werden, verbessert werden kann.

In einer weiteren vorteilhaften Weiterbildung der Erfindung ist vorgesehen, dass zum Ermitteln der örtlichen Korrekturwerte für die Bilddaten des Vergleichsbildes ein maximaler örtlicher Helligkeitswert aus den Bilddaten der Bilder der Vergleichsbildzeitreihe ermittelt wird und der maximale örtliche Helligkeitswert als örtlicher Korrekturwert verwendet wird.

Unter einem örtlichen Helligkeitswert wird dabei ein Helligkeitswert an einer bestimmten Position des Bildes verstanden. Die Position des örtlichen Helligkeitswerts kann sich wiederum beispielsweise auf die Position eines einzelnen Pixels im Bild beziehen, wodurch eine besonders hohe Genauigkeit des örtlichen Korrekturwerts erzielt wird. Die Position des örtlichen Helligkeitswerts kann sich aber auch auf die Position eines größeren Bereichs des Bildes, beispielsweise auf die Position eines Bildblocks im Bild, beziehen. Hierdurch wird der mit dem Ermitteln der örtlichen Korrekturwerte verbundene Rechen- und Speicheraufwand verringert. Der örtliche Helligkeitswert kann sich grundsätzlich auch auf das gesamte Bild beziehen. Auf diese Weise kann der Rechen- und Speicheraufwand weiter verringert werden. Ein örtlicher Helligkeitswert, insbesondere ein maximaler örtlicher Helligkeitswert, kann somit beispielsweise eine pixelgenaue, blockgenaue oder bildgenaue Auflösung aufweisen.

Um einen örtlichen Korrekturwert zu ermitteln, der einer bestimmten Korrekturposition innerhalb des Vergleichsbildes zugeordnet ist, kann demnach vorgesehen werden, dass durch Vergleichen der Helligkeitswerte der Bilder der Vergleichsbildzeitreihe an der Korrekturposition der maximale örtliche Helligkeitswert, d. h. das Bilddatum mit der höchsten Helligkeit, für diese Korrekturposition ermittelt wird. Dieser maximale örtliche Helligkeitswert kann als örtlicher Korrekturwert für die Korrekturposition verwendet werden.

Die Verwendung maximaler örtlicher Helligkeitswerte als örtliche Korrekturwerte ist vorteilhaft, da angenommen werden kann, dass eines oder mehrere der gespeicherten Bilder der Vergleichsbildzeitreihe die flackernde Lichtinformation, die einen zu korrigierenden Bildfehler hervorgerufen hat, im An-Zustand bzw. in einem Zustand großer Helligkeit erfasst hat. Durch die Bestimmung maximaler örtlicher Helligkeitswerte können auf einfache und effiziente Weise diejenigen Bilddaten aus der Vergleichsbildzeitreihe ermittelt werden, welche die gepulste Lichtquelle bzw. die von ihr emittierte flackernde Lichtinformation im An-Zustand bzw. im Zustand großer Helligkeit zeigen.

Insbesondere können in einer vorteilhaften Weiterbildung der Erfindung sämtliche maximalen örtlichen Helligkeitswerte für sämtliche möglichen Korrekturpositionen aus den Bilddaten der Vergleichsbildzeitreihe ermittelt und gespeichert werden. Beispielsweise kann für jede einzelne Pixelposition der maximale Helligkeitswert aus den Bilddaten der Vergleichsbildzeitreihe ermittelt werden. Auf diese Weise entsteht ein Maximalhelligkeitsbild, dessen Bilddaten für jede Korrekturposition den maximalen Helligkeitswert der Vergleichsbildzeitreihe aufweisen. Im Bedarfsfall, d. h. sofern die generierte Fehlermaske an mindestens einer Fehlerposition einen Bildfehler des Vergleichsbildes anzeigt, kann dann dem Maximalhelligkeitsbild an der der Fehlerposition entsprechenden Korrekturposition der Korrekturwert für das Vergleichsbild entnommen werden.

Die Bilddaten des Maximalhelligkeitsbildes können vorteilhaft außerdem einer Dilatation unterzogen werden, bei der die hellen Bereiche des Maximalhelligkeitsbildes aufgeweitet werden. Durch die Dilatation können vorteilhaft Relativbewegungen der gepulsten Lichtquellen bzw. der von ihnen emittierten flackernden Lichtinformationen ausgeglichen werden, sodass eine verbesserte Genauigkeit der dem Maximalhelligkeitsbild entnommenen örtlichen Korrekturwerte erreicht wird.

In einer weiteren vorteilhaften Weiterbildung der Erfindung ist vorgesehen, dass aus der Belichtungsreihe, die insbesondere eine von einem HDR-Bildsensor erzeugte HDR-Belichtungsreihe sein kann, durch HDR-Postprocessing (High-Dynamic-Range-Postprocessing) unter Verwendung mindestens eines korrigierten Vergleichsbildes ein Ausgabebild für den Betrachter erzeugt wird. Dabei werden zunächst ein oder mehrere Vergleichsbilder, die Bestandteil der eingelesenen Belichtungsreihe sind, korrigiert, indem örtliche Korrekturwerte an den durch die Fehlermaske angezeigten Fehlerpositionen eingefügt werden. Dadurch wird eine korrigierte Belichtungsreihe erzeugt, die Bilder unterschiedlicher Belichtungszeit, nämlich mindestens ein Referenzbild und mindestens ein korrigiertes Vergleichsbild, enthält. Aus den Bilddaten der Bilder dieser korrigierten Belichtungsreihe kann durch HDR-Postprocessing in dem Fachmann bekannter Weise ein Ausgabebild für den Betrachter erzeugt werden.

Die Erzeugung eines solchen Ausgabebildes aus der (korrigierten) Belichtungsreihe durch HDR-Postprocessing bietet zum einen den Vorteil, dass aufgrund der unterschiedlichen Belichtungszeiten der Bilder der Belichtungsreihe eine größere Helligkeitsdynamik im Vergleich zu einem Einzelbild bereitgestellt wird, sodass die Qualität des Ausgabebildes diesbezüglich verbessert werden kann. Zum anderen bietet dies den Vorteil, dass durch kurze Belichtungszeiten bedingte Bildfehler im Ausgabebild vermieden werden, da die im jeweiligen Vergleichsbild vorgenommenen Korrekturen in das Ausgabebild übernommen werden können. Auf diese Weise kann ein Flicker-reduziertes oder sogar ein Flicker-befreites Ausgabebild mit verbesserter Helligkeitsdynamik bereitgestellt werden.

In einer weiteren vorteilhaften Weiterbildung der Erfindung ist vorgesehen, dass die eingelesene Belichtungsreihe Bestandteil einer von dem Bildsensor erzeugten Belichtungsreihensequenz ist, wobei die Belichtungsreihensequenz eine Folge von Belichtungsreihen umfasst. Die Folge von Belichtungsreihen zeigt zeitlich aufeinanderfolgende Szenen, die flackernde Lichtinformationen enthalten können.

Eine solche Belichtungsreihensequenz kann insbesondere eine von dem Bildsensor erzeugte Videosequenz sein. Dabei wird jede der zeitlich aufeinanderfolgenden Szenen nicht lediglich durch ein Einzelbild dargestellt, wie dies bei herkömmlichen Bildsequenzen zur Darstellung bewegter Bilder der Fall ist, sondern jede der aufeinanderfolgenden Szenen wird durch eine Belichtungsreihe dargestellt, die mehrere Bilder mit unterschiedlicher Belichtungszeit umfasst.

Das erfindungsgemäße Verfahren kann auf diese Weise auf die einzelnen zeitlich aufeinanderfolgenden Belichtungsreihen einer Belichtungsreihensequenz, insbesondere einer Videosequenz, angewendet werden, sodass vorteilhaft durch flackernde Lichtinformationen hervorgerufene Bildfehler in der Belichtungsreihensequenz erkannt und korrigiert werden können. Das erfindungsgemäße Verfahren eignet sich daher insbesondere zur Erkennung und Korrektur von durch flackernde Lichtinformationen hervorgerufenen Bildfehlern in Videosequenzen.

In einer weiteren vorteilhaften Weiterbildung der Erfindung ist vorgesehen, dass die Belichtungszeit mindestens eines Referenzbildes zwischen 50 % und 100 % der Bilddauer der Belichtungsreihensequenz beträgt. Für eine Bildfrequenz von 60 Bildern pro Sekunde d.h. einer Bilddauer von 1/60 s (-16.67ms) ist vorgesehen, daß die Belichtungszeit mindestens eines Referenzbildes zwischen 1/120 s (~8,33 ms) und 1/60 s (-16.67ms) beträgt. Die Belichtungszeit mindestens eines Vergleichsbildes kann insbesondere 1 ms oder weniger betragen.

Im Falle einer herkömmlichen Bildsequenz, bei der zur Darstellung bewegter Bilder eine Abfolge zeitlicher aufeinanderfolgender, mit einer bestimmten Bildfrequenz (Frame Rate) aufgenommener und wiedergegebener Bilder verwendet wird, bezeichnet die Bilddauer (Frame Duration) den Kehrwert der Bildfrequenz, d. h. den zeitlichen Abstand zweier zeitlich unmittelbar aufeinanderfolgender Bilder. In Analogie hierzu wird unter der Bilddauer der Belichtungsreihensequenz der zeitliche Abstand zweier zeitlich unmittelbar aufeinanderfolgender Belichtungsreihen verstanden.

Der Bildsensor kann beispielsweise Belichtungsreihen mit einer Frequenz von 60 Hz erzeugen. In diesem Fall beträgt die Bilddauer der von dem Bildsensor erzeugten Belichtungsreihensequenz 1000/60 ms = 50/3 ms ≈ 16,67 ms. Soll die Belichtungszeit mindestens eines Referenzbildes in diesem Fall zwischen 50 % und 100 % der Bilddauer der Belichtungsreihensequenz betragen, so ergeben sich Belichtungszeiten zwischen 25/3 ms und 50/3 ms. Der Bildsensor kann allerdings auch Belichtungsreihen mit einer höheren oder geringeren Frequenz, z. B. mit einer Frequenz von 50 Hz, 30 Hz, 25 Hz, 100 Hz oder mit einer anderen Frequenz erzeugen. Das erfindungsgemäße Verfahren ist grundsätzlich unabhängig von der Frequenz, mit der der Bildsensor die Belichtungsreihen der Belichtungsreihensequenz erzeugt, und kann für Belichtungsreihensequenzen beliebiger Bilddauer angewendet werden.

Wird die Belichtungszeit mindestens eines Referenzbildes so gewählt, dass sie zwischen 50 % und 100 % der Bilddauer der Belichtungsreihensequenz beträgt, so bietet dies den Vorteil, dass der An-Zustand der eingeschalteten gepulsten Lichtquellen, z. B. eingeschalteter LEDs, mit hoher Wahrscheinlichkeit vollständig oder zumindest teilweise in die Belichtungszeit fällt und somit durch das Referenzbild erfasst wird. Wird die Belichtungszeit mindestens eines Referenzbildes so gewählt, dass sie 100 % der Bilddauer der Belichtungsreihensequenz entspricht, so kann davon ausgegangen werden, dass der An-Zustand der eingeschalteten gepulsten Lichtquellen, z. B. eingeschalteter LEDs, mit Sicherheit durch das Referenzbild erfasst wird. Wird die Belichtungszeit mindestens eines Referenzbildes so gewählt, dass sie zwischen 50 % und 100 % der Bilddauer der Belichtungsreihensequenz beträgt, so kann demnach vorteilhaft sichergestellt werden, dass Bildfehler in den Bilddaten des Vergleichsbildes, die durch flackernde Lichtinformationen hervorgerufen wurden, durch einen Vergleich mit den Bilddaten des Referenzbildes zuverlässig erkannt werden können.

Beträgt die Belichtungszeit mindestens eines Vergleichsbildes 1 ms oder weniger, so bietet dies zum einen den Vorteil, dass das Vergleichsbild auch dann eine hinreichende Bildschärfe aufweist, wenn die abgebildete Szene schnelle Relativbewegungen enthält. Bei Verwendung einer längeren Belichtungszeit könnten die von der Relativbewegung betroffenen Teile der Szene hingegen unscharf wiedergegeben werden. Zum anderen bietet diese kurze Belichtungszeit des Vergleichsbildes den Vorteil, dass auch sehr helle Bereiche der Szene fehlerfrei abgebildet werden können, da der Bildsensor aufgrund der kurzen Belichtungszeit auch in den sehr hellen Bereichen nicht die Sättigung erreicht. Unerwünschte Clipping-Effekte in den Bilddaten des Vergleichsbildes, die durch eine Übersteuerung des Bildsensors hervorgerufen werden, werden dabei vermieden.

In einer weiteren vorteilhaften Weiterbildung der Erfindung ist vorgesehen, dass die zuvor erläuterten Verfahrensschritte des erfindungsgemäßen Verfahrens wiederholt werden. Das erfindungsgemäße Verfahren wird dabei auf eine Mehrzahl von Belichtungsreihen der Belichtungsreihensequenz oder auf jede Belichtungsreihe der Belichtungsreihensequenz angewendet. Dadurch wird eine korrigierte Belichtungsreihensequenz erzeugt, die korrigierte Vergleichsbilder umfasst.

Die Belichtungsreihensequenz kann dabei insbesondere eine Videosequenz sein. Auf diese Weise kann das erfindungsgemäße Verfahren vorteilhaft beispielsweise auf eine Videosequenz angewendet werden, die durch flackernde Lichtinformationen hervorgerufene Bildfehler enthält, um die Bildfehler der Videosequenz zu erkennen und zu korrigieren, sodass eine Flicker-reduzierte oder sogar eine Flickerbefreite Videosequenz bereitgestellt werden kann.

In einer weiteren vorteilhaften Weiterbildung der Erfindung ist vorgesehen, dass auf die Bilddaten der Bilder der korrigierten Belichtungsreihensequenz ein Korrekturverfahren zur Korrektur verbleibender, durch flackernde Lichtinformationen hervorgerufener Bildfehler angewendet wird. Das Korrekturverfahren kann sich dabei auf eine Bewegungsschätzung und eine Bewegungskompensation der Bilddaten der Bilder der korrigierten Belichtungsreihensequenz stützen. Ergänzend oder alternativ hierzu kann sich das Korrekturverfahren auf ein Mischen der Bilddaten verschiedener Bilder der korrigierten Belichtungsreihensequenz stützen.

Auch nach der Anwendung der zuvor erläuterten erfindungsgemäßen Korrektur von Bildfehlern durch Einfügen örtlicher Korrekturwerte kann die Belichtungsreihensequenz, die insbesondere eine Videosequenz sein kann, noch verbleibende Bildfehler aufweisen, die durch flackernde Lichtinformationen hervorgerufen wurden. Durch das Mischen der Bilddaten verschiedener Bilder der korrigierten Belichtungsreihensequenz werden die Bilder der korrigierten Belichtungsreihensequenz quasi interpoliert. Wurde eine flackernde Lichtinformationen in einem der Bilder, deren Bilddaten gemischt werden, korrekt erfasst, in einem anderen Bild jedoch aufgrund eines Bildfehlers nicht erfasst, bleibt diese korrekt erfasste Lichtinformation nach dem Mischen erhalten. Die Lichtinformation wird durch das Mischen zwar abgeschwächt, ist aber trotzdem vorhanden. Die Bilder der Belichtungsreihensequenz können für das Mischen nach einer Bewegungsschätzung bewegungskompensiert werden, sodass durch eine zwischenzeitliche Relativbewegung verschobene Bildinhalte für die Quasi-Interpolation wieder zusammengeführt werden. Für das Verfahren können somit die dem Fachmann bekannten Methoden zur Bewegungsschätzung und Bewegungskompensation genutzt werden.

Auf diese Weise können vorteilhaft verbleibende, durch flackernde Lichtinformationen hervorgerufene Bildfehler in den Bildern der korrigierten Belichtungsreihensequenz korrigiert werden.

Wie eingangs bereits erläutert wurde, können durch flackernde Lichtinformationen in Bildsequenzen, die von Fahrzeugkameras erzeugt worden sind, Sicherheitsrisiken, z. B. durch eine erhöhte Unfallgefahr, ausgehen, wenn die Bildsequenzen wegen der flackernden Lichtinformationen fehlerhaft oder unvollständig im Fahrzeug wiedergegeben werden.

Vorteilhaft wird das erfindungsgemäße Verfahren daher in einem Kraftfahrzeug ausgeführt.

In einer vorteilhaften Weiterbildung der Erfindung wird das erfindungsgemäße Verfahren durch eine Bildverarbeitungseinheit ausgeführt, die in ein Kraftfahrzeug integriert ist. Das erfindungsgemäße Verfahren kann dabei insbesondere von einer Datenverarbeitungseinheit ausgeführt werden, die Bestandteil der Bildverarbeitungseinheit ist oder mit dieser verbunden ist. Die Belichtungsreihe kann insbesondere eine von einem in das Kraftfahrzeugzeug integrierten Bildsensor erzeugte Belichtungsreihe sein. Der in das Kraftfahrzeugzeug integrierte Bildsensor kann dabei Bestandteil der Bildverarbeitungseinheit sein oder an die Bildverarbeitungseinheit angeschlossen sein.

Ein solcher in das Kraftfahrzeug integrierter Bildsensor kann insbesondere eine in das Kraftfahrzeug integrierte Kamera oder Bestandteil einer in das Kraftfahrzeug integrierten Kamera sein. Eine solche in das Kraftfahrzeug integrierte Kamera wird auch als Fahrzeugkamera bezeichnet. Eine solche in das Kraftfahrzeug integrierte Kamera kann insbesondere eine Frontkamera, eine Rückkamera, eine Rückfahrkamera, eine Seitenkamera oder eine andere in das Kraftfahrzeug integrierte Kamera sein. Eine solche in das Kraftfahrzeug integrierte Kamera kann insbesondere eine Kamera sein, welche dem Fahrer zur Beobachtung des Fahrzeugumfelds dient. Eine solche in das Kraftfahrzeug integrierte Kamera kann insbesondere auch eine Monokamera oder eine Stereokamera sein, welche als optischer Sensor zur Ermittlung von Sensordaten für ein oder mehrere Fahrerassistenzsysteme des Kraftfahrzeugs dient.

Eine derartige Weiterbildung des erfindungsgemäßen Verfahrens ist besonders vorteilhaft, weil dadurch die oben genannten Sicherheitsrisiken im Umfeld des Einsatzes von Kameras in Kraftfahrzeugen verringert oder sogar vollständig beseitigt werden können. Dies ist von besonderer Bedeutung, da LEDs, die flackernde Lichtinformationen verursachen, eine immer größere Verbreitung im Fahrzeugumfeld finden.

Die flackernden Lichtinformationen können daher insbesondere flackernde Lichtinformationen sein, die durch von Leuchtdioden emittiertes Licht hervorgerufen werden.

In einer vorteilhaften Weiterbildung der Erfindung ist die zur Durchführung des erfindungsgemäßen Verfahrens eingerichtete Bildverarbeitungseinheit und/oder eine Kamera, die Bestandteil der Bildverarbeitungseinheit ist oder an die Bildverarbeitungseinheit angeschlossen ist, in einem Kraftfahrzeug integriert.

Auf diese Weise ist es vorteilhaft möglich, das erfindungsgemäße Verfahren im Kraftfahrzeug zu nutzen und die oben genannten Sicherheitsrisiken im Umfeld des Einsatzes von Kameras in Kraftfahrzeugen zu verringern oder sogar vollständig zu beseitigen.

Die Erfindung wird nachfolgend anhand von Ausführungsbeispielen mit den beigefügten Zeichnungen beispielhaft näher erläutert. Es zeigen:

Figur 1     - schematische Darstellung einer beispielhaften Belichtungsreihe mit einem Referenzbild und zwei Vergleichsbildern sowie zwei daraus generierten Fehlermasken;

Figur 2     - schematische Darstellung eines ersten Ausführungsbeispiels des erfindungsgemäßen Verfahrens;

Figur 3     - Blockdiagramm eines zweiten Ausführungsbeispiels des erfindungsgemäßen Verfahrens;

Figur 4     - Blockdiagramm eines Ausführungsbeispiels einer erfindungsgemäßen Fehlerkorrektur unter Verwendung maximaler Helligkeitswerte;

Figur 5     - Blockdiagramm einer Bildverarbeitungseinheit zur Durchführung des Verfahrens.

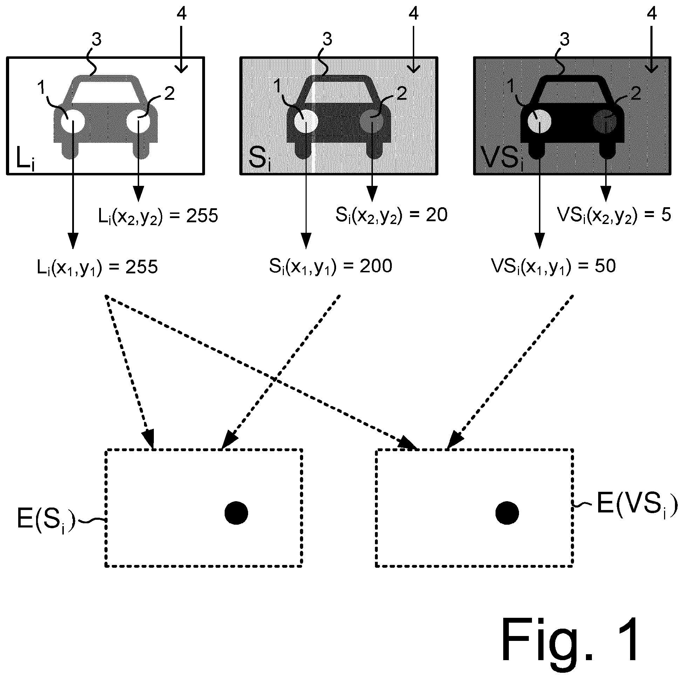

Figur 1 zeigt eine schematische Darstellung einer beispielhaften Belichtungsreihe, wie sie im ersten Schritt des erfindungsgemäßen Verfahrens eingelesen wird, sowie zwei daraus generierte Fehlermasken E(Si) und E(VSi). Die Belichtungsreihe besteht aus einem Referenzbild $L_i$, einem ersten Vergleichsbild Si und einem zweiten Vergleichsbild VSi. Die Belichtungsreihe ist Bestandteil einer von einem Bildsensor erzeugten Videosequenz, die aufeinanderfolgende, mit einer Frequenz (Frame Rate) von 60 Hz erzeugte Belichtungsreihen umfasst. Der Bildsensor erzeugt dabei in jedem Zeitschritt, dessen Länge der Bilddauer der Videosequenz von ~16,67 ms entspricht, eine Belichtungsreihe. Der Index i zeigt dabei an, dass es sich um eine im Zeitschritt i vom Bildsensor erzeugte Belichtungsreihe, d. h. die i-te Belichtungsreihe der Videosequenz handelt.

Die Bilder $L_i$, Si und VSi der Belichtungsreihe zeigen dieselbe Szene 4 mit einem Fahrzeug 3, dessen Scheinwerfer 1, 2 gepulste LEDs nutzen und daher flackernde Lichtinformationen emittieren. Die Bilder der Belichtungsreihe sind mit unterschiedlicher Belichtungszeit aufgenommen. Die Belichtungszeit des Referenzbildes $L_i$ beträgt $T_L$ = 16 ms, die Belichtungszeit des ersten Vergleichsbildes Si beträgt Ts = $T_L$/4 = 4 ms und die Belichtungszeit des zweiten Vergleichsbildes VSi beträgt Tvs = Ts/4 = $T_L$/16 = 1 ms. Die Bilder weisen daher eine unterschiedliche Helligkeit auf. Während das Bild Si die Helligkeit der überwiegend realitätsnah wiedergibt, ist das Bild VSi aufgrund seiner kurzen Belichtungszeit unterbelichtet und das Bild $L_i$ aufgrund seiner langen Belichtungszeit überbelichtet.

Beide Scheinwerfer 1, 2 des Fahrzeugs sind eingeschaltet. Sämtliche Bilder, d. h. sowohl das Referenzbild $L_i$ als auch die Vergleichsbilder Si und VSi zeigen daher den An-Zustand des ersten Scheinwerfers 1. Aufgrund ihrer kurzen Belichtungszeiten zeigen die Vergleichsbilder Si und VSi jedoch nicht den An-Zustand, sondern den Aus-Zustand des Scheinwerfers 2. Dies liegt darin begründet, dass die Belichtungszeiten der Vergleichsbilder Si und VSi vollständig in die Aus-Phase der gepulsten LEDs des Scheinwerfers 2 fallen. Dieser Effekt tritt quasi-zufällig auf, d. h. ein unmittelbar vorangegangenes Vergleichsbild $S_{i-1}$ oder $VS_{i-1}$ oder ein unmittelbar folgendes Vergleichsbild $S_{i+1}$ oder $VS_{i+1}$ mit derselben Belichtungszeit kann bereits den An-Zustand des Scheinwerfers 2 zeigen. Die beiden Vergleichsbilder Si und VSi weisen somit Bildfehler auf, die durch die von dem Scheinwerfer 2 emittierten flackernden Lichtinformationen hervorgerufen wurden.

Aufgrund seiner langen Belichtungszeit zeigt das Referenzbild $L_i$ hingegen beide Scheinwerfer 1, 2 in ihrem An-Zustand, d. h. das Referenzbild $L_i$ weist keine durch flackernde Lichtinformationen hervorgerufenen Bildfehler auf. Diese Tatsache kann dazu genutzt werden, die durch flackernde Lichtinformationen hervorgerufenen Bildfehler in den Vergleichsbildern zu erkennen und zu korrigieren.

Zu diesem Zweck werden die Bilddaten des jeweiligen Vergleichsbildes Si bzw. VSi mit den Bilddaten des Referenzbildes $L_i$ örtlich, d. h. positionsweise verglichen und auf diese Weise örtliche Abweichungen zwischen den Bilddaten ermittelt. Im dargestellten Beispiel erfolgt der Vergleich pixelweise, d. h. die Bilddaten werden für jeden einzelnen Pixel der Bilder verglichen. Die Bilddaten liegen dabei in Form von Helligkeitswerten mit einer beispielhaften Auflösung von 8 bit, d. h. in einem Wertebereich von 0 bis 255 vor.

Die Bilddaten des Referenzbildes $L_i$ haben aufgrund der langen Belichtungszeit im Bereich der beiden Scheinwerfer 1, 2 den Bereich der Sättigung erreicht. Infolge einer Übersteuerung des Bildsensors weisen die zugehörigen Pixel des Referenzbildes demnach an den Positionen $x_1,y_1$ des ersten Scheinwerfers 1 und den Positionen $x_2,y_2$ des zweiten Scheinwerfers 2 die maximalen Helligkeitswerte $L_i(x_1,y_1) = L_i(x_2,y_2) = 255$ auf. Bezogen auf einen absoluten Helligkeitsmaßstab ist das Referenzbild im Bereich der Scheinwerfer aufgrund der Sättigung viel zu dunkel.

Um die Bilddaten der mit unterschiedlichen Belichtungszeiten aufgenommenen Bilder miteinander vergleichen zu können, werden diese zunächst auf eine einheitliche Bezugsgröße normiert. Die Bezugsgröße der normierten Bilddaten kann dabei grundsätzlich frei gewählt werden. In dem in Figur 1 dargestellten Beispiel wird der Helligkeitswert bei einer Belichtungszeit von $T_L$ = 16 ms als normiertes Bilddatum, d. h. als normierte Helligkeit definiert. Die Bilddaten $L_i$ $(x,y)$ des Vergleichsbildes $L_i$, das mit einer Belichtungszeit von $T_L$ = 16 ms aufgenommen wurde, liegen somit bereits in normierter Form vor, sodass keine Normierung notwendig ist.

Die Bilddaten $Si(x,y)$ und $VSi(x,y)$ des ersten und zweiten Vergleichsbildes hingegen beruhen auf einer kürzeren Belichtungsdauer und werden daher zu Vergleichszwecken auf die Belichtungszeit $T_L$ des Referenzbildes normiert, indem die Helligkeitswerte mit einem Faktor ks bzw. kv multipliziert werden, der sich aus dem Verhältnis der Belichtungszeiten ergibt. Dabei gilt

$$k_S = T_L \, / \, T_S = 16 \text{ ms} \, / \, 4 \text{ ms} = 4$$

für das erste Vergleichsbild Si und

$$k_V = T_L \, / \, T_{VS} = 16 \text{ ms} \, / \, 1 \text{ ms} = 16$$

für das zweite Vergleichsbild VSi. Es ergeben sich hieraus die normierten Helligkeitswerte ks · $Si(x,y)$ und kv $VSi(x,y)$, die unmittelbar mit den Bilddaten $L_i(x,y)$ des Referenzbildes verglichen werden können, um örtliche Abweichungen zwischen den Bilddaten zu ermitteln.

Dabei wird zunächst erkennbar, dass das Referenzbild an den Pixelpositionen, die den ersten Scheinwerfer 1 zeigen, aufgrund der Sättigung eine deutlich geringe Helligkeit $L_i(x_1,y_1) = 255$ aufweist als das erste Vergleichsbild und das zweite Vergleichsbild, deren normierte Helligkeiten an diesen Positionen des Bildes ks · $S_i(x_1,y_1) = 4 \cdot 200 = 800$ bzw. kv $VS_i(x_1,y_1) = 16 \cdot 50 = 800$ betragen.

Darüber hinaus wird durch das örtliche Vergleichen der Bilddaten erkennbar, dass das Referenzbild an den Pixelpositionen, die den zweiten Scheinwerfer 2 zeigen, eine deutlich höhere Helligkeit $L_i(x_2,y_2) = 255$ aufweist als das erste Vergleichsbild und das zweite Vergleichsbild, deren normierte Helligkeiten an diesen Positionen des Bildes lediglich $k_S \cdot S_i(x_2,y_2) = 4 \cdot 20 = 80$ bzw. kv $VS_i(x_2,y_2) = 16 \cdot 5 = 80$ betragen.

Die normierte Helligkeit der Vergleichsbilder ist demnach im Bereich des Scheinwerfers 2 deutlich geringer als die Helligkeit des Referenzbildes. Es zeigen sich somit örtliche Abweichungen an den Positionen der Vergleichsbilder, deren Pixel den Aus-Zustand der gepulsten LEDs des Scheinwerfers 2 zeigen, obwohl dieser tatsächlich eingeschaltet ist. Diese Abweichungen können beispielsweise durch eine Differenz $\Delta_S(x,y)$ bzw. $\Delta_V(x,y)$ zwischen den normierten Bilddaten an der Pixelposition $(x,y)$ quantifiziert werden. Im dargestellten Beispiel ergibt sich

$$\Delta_S(x_2,y_2) = L_i(x_2,y_2) - k_S \cdot S_i(x_2,y_2) = 255 - 80 = 175$$

für das erste Vergleichsbild Si und

$$\Delta_V(x_2,y_2) = L_i(x_2,y_2) - k_V \cdot VS_i(x_2,y_2) = 255 - 80 = 175$$

für das zweite Vergleichsbild VSi.

Diese örtlichen Abweichungen zwischen den Bilddaten des Referenzbildes $L_i$ und den Bilddaten der Vergleichsbilder Si und VSi weisen darauf hin, dass die Bilddaten der Referenzbilder im Bereich des zweiten Scheinwerfers durch flackernde Lichtinformationen hervorgerufene Bildfehler enthalten. In Abhängigkeit der örtlichen Abweichungen lassen sich daher Fehlermasken E(Si) und E(VSi) generieren, welche die Fehlerpositionen von Bildfehlern innerhalb der Vergleichsbilder Si bzw. VSi anzeigen.

Zum Generieren einer solchen Fehlermaske E(Si(x,y)) bzw. E(VSi(x,y)) können beispielsweise für das erste Vergleichsbild Si die Bedingungen

$$E(S_i(x,y)) = 1, \text{ wenn } L_i(x,y) > k_S \cdot S_i(x,y) \quad,$$

$$E(S_i(x,y)) = 0, \text{ sonst}$$

oder

$$E(S_i(x,y)) = 1, \text{ wenn } L_i(x,y) >> k_S \cdot S_i(x,y) \quad,$$

$$E(S_i(x,y)) = 0, \text{ sonst}$$

angewendet werden. Für das zweite Vergleichsbild VSi können entsprechend die Bedingungen

$$E(VS_i(x,y)) = 1, \text{ wenn } L_i(x,y) > k_V \cdot VS_i(x,y) \quad,$$

$$E(VS_i(x,y)) = 0, \text{ sonst}$$

oder

$$E(VS_i(x,y)) = 1, \text{ wenn } L_i(x,y) >> k_V \cdot VS_i(x,y) \quad,$$

$$E(VS_i(x,y)) = 0, \text{ sonst}$$

angewendet werden.

Alternativ hierzu können zur Generierung der Fehlermaske die durch die Differenzen $\Delta_S(x,y)$ bzw. $\Delta_V(x,y)$ quantifizierten örtlichen Abweichungen mit einem Schwellenwert $E_{th}$ verglichen werden. Ein Bildfehler an der Fehlerposition (x,y) wird in diesem Fall angenommen, wenn der Schwellenwert erreicht oder überschritten wird, d h. es ergeben sich die Bedingungen

$$E(S_i(x,y)) = 1, \text{ wenn } \Delta_S(x,y) \geq E_{th} \quad,$$

$$E(S_i(x,y)) = 0, \text{ wenn } \Delta_S(x,y) < E_{th}$$

für das erste Vergleichsbild Si und

$$E(VS_i(x,y)) = 1, \text{ wenn } \Delta_V(x,y) \geq E_{th} \quad,$$

$$E(VS_i(x,y)) = 0, \text{ wenn } \Delta_V(x,y) < E_{th}$$

für das zweite Vergleichsbild VSi.

Auf diese Weise kann somit eine Fehlermaske generiert werden, welche die Fehlerpositionen von Bildfehlern innerhalb des jeweiligen Vergleichsbildes, die durch flackernde Lichtinformationen hervorgerufen wurden, anzeigt.

Im dargestellten Beispiel der Figur 1 zeigt die resultierende Fehlermaske E(Si) für das erste Vergleichsbild Si (übereinstimmend unabhängig davon, welche der oben aufgeführten Bedingungen zum Generieren der Fehlermaske verwendet wird) für die Pixelpositionen $(x_2,y_2)$, die den zweiten Scheinwerfer 2 zeigen, einen Bildfehler an, d. h. es gilt $E(S_i(x_2,y_2)) = 1$. Für alle übrigen Pixelpositionen gilt $E(S_i(x,y)) = 0$. Die resultierende Fehlermaske E(VSi) für das zweite Vergleichsbild VSi enthält entsprechend den Wert $E(VS_i(x_2,y_2)) = 1$ für den Bereich des zweiten Scheinwerfers 2 und $E(VS_i(x,y)) = 0$ für alle übrigen Pixelpositionen.

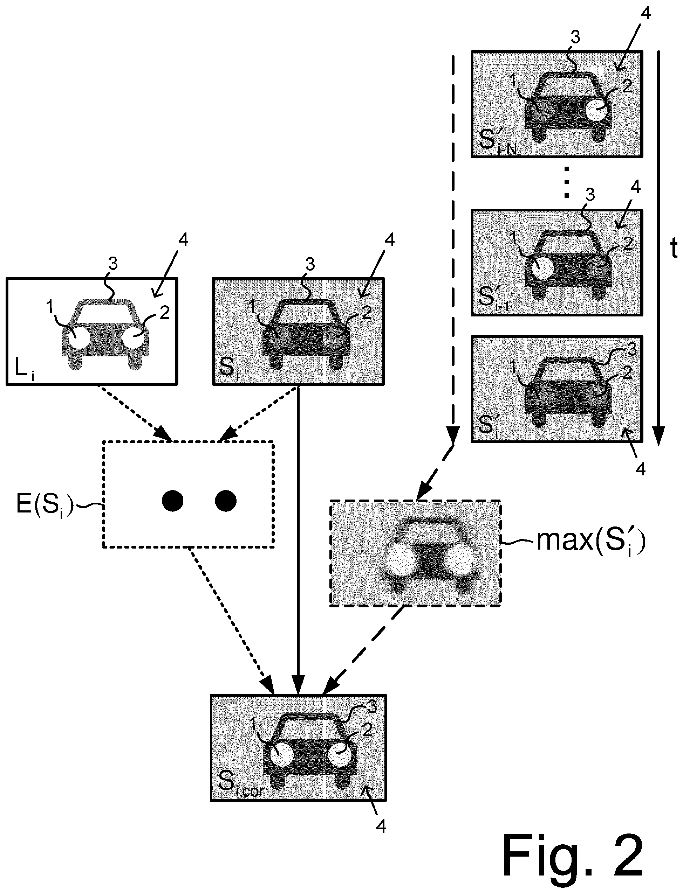

Unter Verwendung der generierten Fehlermasken ist es nun möglich, die Bildfehler der Vergleichsbilder an den durch die Fehlermaske angezeigten Fehlerpositionen durch Korrekturwerte zu korrigieren. Die erfindungsgemäßen Schritte des Ermittelns örtlicher Korrekturwerte und des Erzeugens eines korrigierten Vergleichsbildes werden anhand der folgenden Figuren 2 bis 5 erläutert.

Abweichend von dem hier dargestellten vereinfachten Beispiel können bei der Normierung der Bilddaten neben der Belichtungszeit auch weitere Belichtungsparameter und Betriebskenngrößen des Bildsensors berücksichtigt werden. Hierzu gehören beispielsweise die Sensor-Empfindlichkeit, die analoge Verstärkung (analog gain) im Sensor-A/D Konverter, die Blendenzahl und/oder die Empfindlichkeitskurve (camera response curve) des Bildsensors.

Figur 2 zeigt eine schematische Darstellung eines ersten Ausführungsbeispiels des erfindungsgemäßen Verfahrens. In Übereinstimmung mit dem in Figur 1 dargestellten Beispiel sind wiederum ein Referenzbild $L_i$ und ein Vergleichsbild Si dargestellt, die Bestandteile einer im ersten Schritt des Verfahrens eingelesenen Belichtungsreihe sind. Die Bilder $L_i$ und Si der Belichtungsreihe zeigen dieselbe Szene 4 mit einem Fahrzeug 3, dessen Scheinwerfer 1, 2 gepulste LEDs nutzen und daher flackernde Lichtinformationen emittieren. Die Belichtungszeit des Referenzbildes $L_i$ beträgt $T_L$ = 16 ms, die Belichtungszeit des Vergleichsbildes Si beträgt Ts = $T_L$/4 = 4 ms. Die Bilddaten der Bilder liegen wiederum in der Form von Helligkeitswerten vor.

Die eingelesene Belichtungsreihe, welche die Bilder $L_i$ und Si umfasst, ist analog zu den vorangegangenen Ausführungen die i-te Belichtungsreihe einer von einem Bildsensor erzeugten Videosequenz, d. h. einer Belichtungsreihensequenz, die in aufeinanderfolgenden Zeitschritten erzeugte Belichtungsreihen umfasst.

Beide Scheinwerfer 1, 2 des Fahrzeugs sind eingeschaltet. Während das Referenzbild $L_i$ aufgrund seiner langen Belichtungszeit beide Scheinwerfer 1, 2 in ihrem An-Zustand zeigt, zeigt das Vergleichsbild Si nicht den An-Zustand, sondern den Aus-Zustand der Scheinwerfer 1, 2. Dies liegt darin begründet, dass die kurzen Belichtungszeiten des Vergleichsbildes Si vollständig in die Aus-Phase der gepulsten LEDs der Scheinwerfer 1 und 2 fallen. Das Vergleichsbild Si weist somit Bildfehler auf, die durch die von den Scheinwerfern 1, 2 emittierten flackernden Lichtinformationen hervorgerufen wurden.

Analog zu den Ausführungen zu dem in Figur 1 gezeigten Beispiel werden durch örtliches, pixelweises Vergleichen der Bilddaten des Referenzbildes $L_i$ und des Vergleichsbildes Si örtliche Abweichungen zwischen den Bilddaten der beiden Bilder ermittelt. Örtliche Abweichungen ergeben sich hier an denjenigen Pixelpositionen der Bilder, welche die flackernde Lichtinformationen emittierenden Scheinwerfer 1, 2 des Fahrzeugs 3 zeigen. In Abhängigkeit der ermittelten örtlichen Abweichungen kann analog zu den Ausführungen zu dem in Figur 1 gezeigten Beispiel eine Fehlermaske E(Si) generiert werden. Die Fehlermaske E(Si) zeigt die Fehlerpositionen der durch flackernde Lichtinformationen hervorgerufenen Bildfehler innerhalb des Vergleichsbildes Si. Dies sind gerade diejenigen Pixelpositionen, an denen die Bilder entweder den Scheinwerfer 1 oder den Scheinwerfer 2 zeigen, da das Referenzbild $L_i$ aufgrund des von den LEDs emittierten gepulsten Lichts an diesen Positionen eine deutlich größere Helligkeit aufweist als das Vergleichsbild Si.

Damit sind die Positionen bekannt, an denen das Vergleichsbild Si durch flackernde Lichtinformationen hervorgerufene Bildfehler aufweist, die korrigiert werden müssen. Unter Verwendung der generierten Fehlermasken ist es nun möglich, die Bildfehler der Vergleichsbilder an den durch die Fehlermaske angezeigten Fehlerpositionen durch örtliche Korrekturwerte zu korrigieren.

Zum Ermitteln der örtlichen Korrekturwerte wird in dem in Figur 2 gezeigten Ausführungsbeispiel eine Schätzung angewendet, die auf einer in einem Datenspeicher gespeicherten Vergleichsbildzeitreihe $S'_{i-N},..., S'_{i-1}, S'_i$ beruht. Die Vergleichsbildzeitreihe enthält N+1 gespeicherte Bilder und kann beispielsweise insgesamt 30 gespeicherte Bilder enthalten. Die gespeicherten Bilder $S'_{i-N},... S'_{i-1}$ sind veränderte Kopien von Vergleichsbildern $S_{i-N},... S_{i-1}$, die zu unmittelbar vorangegangenen Belichtungsreihen der Videosequenz gehören, die der Bildsensor in früheren, dem aktuellen Zeitschritt i unmittelbar vorangegangenen Zeitschritten i-N, ..., i-1 erzeugt hat. Die gespeicherten Bilder $S'_{i-N},... S'_{i-1}$ wurden mit der gleichen Belichtungszeit erzeugt wie das aktuell eingelesene Vergleichsbild S. Darüber hinaus enthält die Vergleichsbildzeitreihe $S'_{i-N},..., S'_{i-1}, S'_i$ eine veränderte Kopie des aktuell eingelesenen Vergleichsbildes Si. Die gespeicherten Bilder $S'_{i-N},... S'_{i-1}, S'i$ stellen insofern veränderte Kopien der Vergleichsbilder $S_{i-N},... S_{i-1}$, Si dar, dass sie vor dem Speichern in dem Datenspeicher durch Downscaling verkleinert wurden. Auf diese Weise kann die Größe des für das Speichern der Vergleichsbildzeitreihe $S'_{i-N},... S'_{i-1}, S'i$ benötigten Datenspeichers verringert werden. Vorteilhaft können die gespeicherten Bilder $S'_{i-N},... S'_{i-1}, S'i$ außerdem in bewegungskompensierter Form gespeichert vorliegen, um Relativbewegungen des Fahrzeugs 3 zu dem Bildsensor auszugleichen.

Zum Ermitteln der örtlichen Korrekturwerte für die Bilddaten des Vergleichsbildes Si wird ausgenutzt, dass durch flackernde Lichtinformationen hervorgerufene Bildfehler quasi-zufällig auftreten. Die zu früheren Zeitpunkten aufgenommenen gespeicherten Bilder $S'_{i-N},... S'_{i-1}$ können daher im Gegensatz zum Vergleichsbild Si den An-Zustand des Scheinwerfers 1 oder 2 zeigen, wenn die An-Phase der gepulsten LEDs des Scheinwerfers zumindest teilweise in die Belichtungszeit eines oder mehrerer der gespeicherten Bilder $S'_{i-N},... S'_{i-1}$ gefallen ist. Im Ausführungsbeispiel der Figur 2 zeigt beispielsweise das Bild $S'_{i-N}$ den An-Zustand des Scheinwerfers 1 und das Bild $S'_{i-1}$ den An-Zustand des Scheinwerfers 2.

Zum Ermitteln der örtlichen Korrekturwerte für die Bilddaten des Vergleichsbildes wird nach dem in Figur 2 gezeigten Ausführungsbeispiel nun für jede einzelne Pixelposition, d. h. für sämtliche möglichen Korrekturpositionen, der maximale örtliche Helligkeitswert aus den Bilddaten der Vergleichsbildzeitreihe $S'_{i-N},... S'_{i-1}, S'_i$ ermittelt und gespeichert. Auf diese Weise kann ein Maximalhelligkeitsbild max(S'i) generiert werden, dessen Bilddaten für jede Korrekturposition den maximalen Helligkeitswert der Vergleichsbildzeitreihe $S'_{i-N}$,... $S'_{i-1}$, $S'i$ aufweisen. Die Bilddaten des Maximalhelligkeitsbildes $max(S'i)$ werden außerdem einer Dilatation unterzogen, bei der die hellen Bereiche des Maximalhelligkeitsbildes aufgeweitet werden.

Die maximalen örtlichen Helligkeitswerte des generierten Maximalhelligkeitsbildes können nun als örtliche Korrekturwerte für die Bildfehler des Vergleichsbildes Si an den zugehörigen Fehlerpositionen verwendet werden. Als Folge der Dilatation des Maximalhelligkeitsbildes, des Downscalings der gespeicherten Bilder sowie von Relativbewegungen des Fahrzeugs 3 zu dem Bildsensor zwischen den Zeitschritten i-N, ..., i-1, i der Videosequenz weisen die maximalen örtlichen Helligkeitswerte des Maximalhelligkeitsbildes $max(S'_i)$ keine hohe Positionsgenauigkeit auf. Eine hohe Genauigkeit ist diesbezüglich aber auch nicht notwendig, da die hochgenauen Fehlerpositionen der im Vergleichsbild vorhandenen Bildfehler der Fehlermaske E(Si) entnommen werden können.

Unter Verwendung des Vergleichsbildes Si, der Fehlermaske E(Si) und der maximalen Helligkeitswerte des Maximalhelligkeitsbildes $max(S'i)$ wird nun ein korrigiertes Vergleichsbild $S_{i,cor}$ erzeugt, in welchem die Bildfehler korrigiert wurden, die durch die gepulsten LEDs der Scheinwerfer 1, 2 hervorgerufen wurden. Hierzu wird an jeder durch die Fehlermaske E(Si) angezeigten Fehlerposition der Helligkeitswert des Vergleichsbildes Si durch den maximalen Helligkeitswert des Maximalhelligkeitsbildes $max(S'i)$ ersetzt, d. h. die maximalen Helligkeitswerte werden als örtliche Korrekturwerte in das Vergleichsbild eingefügt. Im Ausführungsbeispiel der Figur 2 hat dies zur Folge, dass die Helligkeitswerte sämtlicher Pixel des Vergleichsbildes Si, welche die mit gepulsten LEDs betriebenen Scheinwerfer 1, 2 zeigen, durch die Maximalhelligkeitswerte aus dem Maximalhelligkeitsbild $max(S'i)$ ersetzt werden. Das korrigierte Vergleichsbild $S_{i,cor}$ zeigt demnach beide Scheinwerfer im An-Zustand und weist somit keine Bildfehler mehr auf.

Durch wiederholte Durchführung des in Figur 2 dargestellten Verfahrens auf eine Mehrzahl aufeinanderfolgender Belichtungsreihen der Videosequenz ist es erfindungsgemäß möglich, eine korrigierte Videosequenz mit korrigierten Vergleichsbilder $S_{i,cor}$ zu erzeugen.

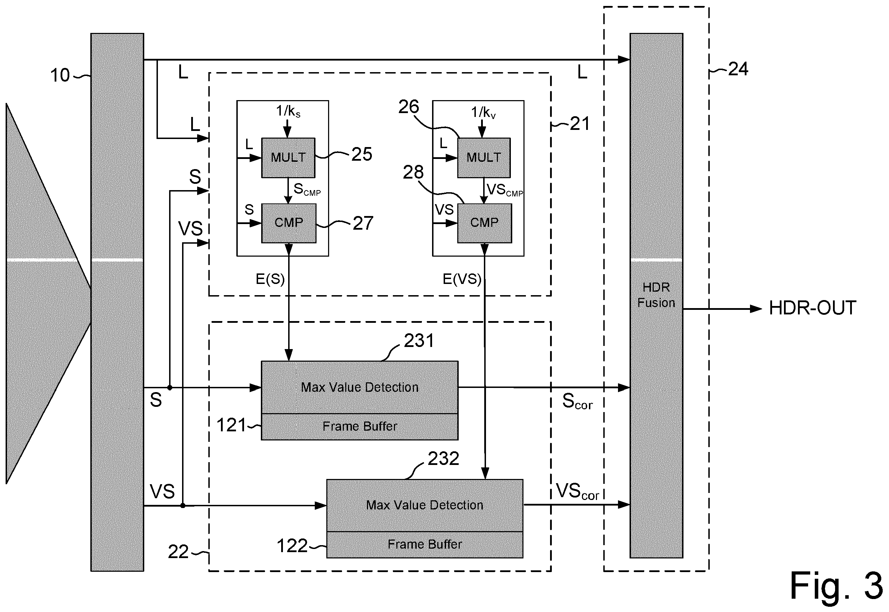

Figur 3 zeigt ein Blockdiagramm eines zweiten Ausführungsbeispiels des erfindungsgemäßen Verfahrens.

Dargestellt ist ein Bildsensor 10, der ein HDR-Bildsensor ist und eine HDR-Belichtungsreihe erzeugt hat. Abweichend von dem in Figur 2 gezeigten ersten Ausführungsbeispiel umfasst die in Figur 3 gezeigte Belichtungsreihe neben dem Referenzbild L und dem Vergleichsbild S ein weiteres Vergleichsbild VS. Zur Vereinfachung der Darstellung wird der Zeitindex i der Bilder $L_i$, Si und VSi, der den Zeitschritt anzeigt, in dem das Bild aufgenommen wurde, in der Figur 3 weggelassen. Bezüglich der Eigenschaften der Bilder **L,** S und VS, insbesondere bezüglich ihrer unterschiedlichen Belichtungszeiten, kann auf die entsprechenden Ausführungen zu dem in Figur 1 gezeigten Beispiel verwiesen werden. Die Bilddaten liegen auch in diesem Ausführungsbeispiel in der Form von Helligkeitswerten vor.

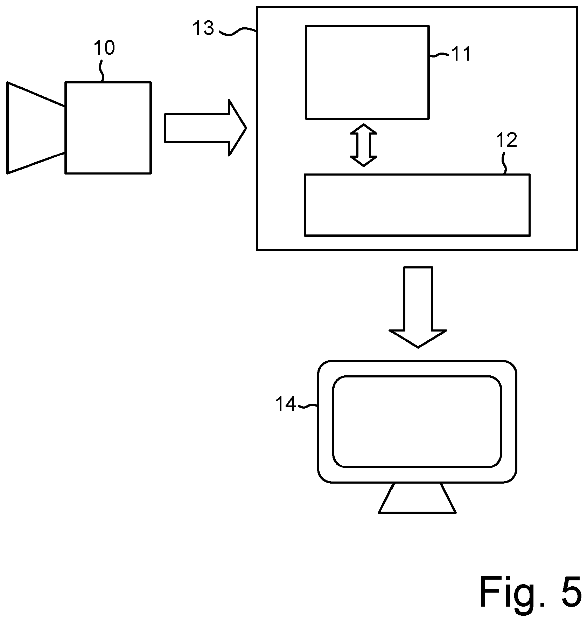

Das Blockdiagramm der Figur 3 zeigt außerdem eine Flicker-Detektionseinheit 21 zur Erkennung von durch flackernde Bildinformationen hervorgerufenen Bildfehlern, eine Flicker-Korrektureinheit 22 zur Korrektur von durch flackernde Bildinformationen hervorgerufenen Bildfehlern und eine HDR- Postprocessingeinheit 24, die durch HDR-Postprocessing ein Ausgabebild erzeugt. Die Flicker-Detektionseinheit 21, die Flicker-Korrektureinheit 22 und die HDR-Postprocessingeinheit 24 können in Software und/oder Hardware realisierte Bestandteile einer Datenverarbeitungseinheit 11 sein, die in Figur 3 nicht gezeigt ist, aber in Figur 5 gezeigt ist.

Die Bilddaten der Belichtungsreihe mit den drei Bildern **L,** S und VS werden von dem Bildsensor 10 über entsprechende Schnittstellen sowohl der Flicker-Detektionseinheit 21 als auch der Flicker-Korrektureinheit 22 bereitgestellt. Die Bilddaten des Referenzbildes L werden außerdem ohne weitere Verarbeitung über eine Schnittstelle der HDR-Postprocessingeinheit 24 bereitgestellt.

Die Flicker-Detektionseinheit 21 führt im Funktionsblock 25 zunächst eine Multiplikation der Helligkeitswerte des Referenzbildes L mit dem Quotienten 1/ks durch, um den unterschiedlichen Belichtungszeiten und Sensorempfindlichkeiten der Bilder L und S Rechnung zu tragen und eine direkte Vergleichbarkeit der Bilddaten dieser beiden Bilder zu ermöglichen. ks bezeichnet dabei den im Zusammenhang mit der Figur 1 erläuterten Faktor, der sich aus dem Verhältnis der Belichtungszeiten beider Bilder als ks = $T_L$ / Ts ergibt bei Annahme gleicher Sensorempfindlichkeiten Die aus der Multiplikation resultierenden Bilddaten $S_{CMP}$ werden anschließend im Funktionsblock 27 mit den Bilddaten des Vergleichsbildes S verglichen und auf diese Weise örtliche Abweichungen zwischen den Bilddaten beider Bilder ermittelt. In Abhängigkeit der ermittelten örtlichen Abweichungen der Bilddaten wird eine Fehlermaske E(S) generiert, welche die Fehlerpositionen von Bildfehlern innerhalb des Vergleichsbildes S anzeigt.

In entsprechender Weise führt die Flicker-Detektionseinheit 21 im Funktionsblock 26 eine Multiplikation der Helligkeitswerte des Referenzbildes L mit dem Quotienten 1/kv durch, um den unterschiedlichen Belichtungszeiten der Bilder L und VS Rechnung zu tragen und eine direkte Vergleichbarkeit der Bilddaten dieser beiden Bilder zu ermöglichen. Kv ergibt sich dabei aus dem Verhältnis der Belichtungszeiten als kv = $T_L$ / Tv. Alternativ kann der Funktionsblock 26 mit dem bereits korrigiertem Bild Scor und dem Quotienten kvs den Vergleich durchführen. Statt des Referenzbildes L wird dann das bereits korrigierte Bild Scor verwendet und als Quotient statt 1/kv der Wert 1/kvs mit kvs = Ts/Tv. Die aus der Multiplikation resultierenden Bilddaten $VS_{CMP}$ werden anschließend im Funktionsblock 28 mit den Bilddaten des Vergleichsbildes VS verglichen und auf diese Weise örtliche Abweichungen zwischen den Bilddaten beider Bilder ermittelt. In Abhängigkeit der ermittelten örtlichen Abweichungen der Bilddaten wird eine Fehlermaske E(VS) generiert, welche die Fehlerpositionen von Bildfehlern innerhalb des Vergleichsbildes VS anzeigt.

Die generierten Fehlermasken E(S) und E(VS) werden an die Flicker-Korrektureinheit 22 weitergegeben.

Die Flicker-Korrektureinheit 22 weist einen Funktionsblock 231 auf, der mit Hilfe eines ihm zugeordneten Datenspeichers 121 eine maximalwertbasierte Bildfehlerkorrektur der Bilddaten des Vergleichsbildes S durchführt. Die Flicker-Korrektureinheit 22 weist des Weiteren einen Funktionsblock 232 auf, der mit Hilfe eines ihm zugeordneten Datenspeichers 122 eine maximalwertbasierte Bildfehlerkorrektur der Bilddaten des Vergleichsbildes VS durchführt. Der Datenspeicher 121 und der Datenspeicher 122 können dabei Speicherbereiche in einem gemeinsamen Speicher 12 sein, der in der Figur 3 nicht gezeigt ist, aber in der Figur 5 gezeigt ist. Um die Bildfehlerkorrektur durchführen zu können, werden dem Funktionsblock 231 die Bilddaten des Vergleichsbildes S und die Fehlermaske E(S) sowie dem Funktionsblock 232 die Bilddaten des Vergleichsbildes VS und die Fehlermaske E(VS) bereitgestellt. Auf dieser Grundlage erzeugt die Flicker-Korrektureinheit 22 ein korrigiertes Vergleichsbild $S_{cor}$ und ein korrigiertes Vergleichsbild $VS_{cor}$, deren Bilddaten über entsprechende Schnittstellen der HDR-Postprocessingeinheit 24 bereitgestellt werden.

Die HDR-Postprocessingeinheit 24 erzeugt schließlich durch HDR-Postprocessing unter Verwendung des Referenzbildes L, des korrigierten Vergleichsbildes $S_{cor}$ und des korrigierten Vergleichsbildes $VS_{cor}$ ein Ausgabebild HDR-OUT, das ein HDR-Ausgabebild ist. Das Ausgabebild HDR-OUT kann einem Betrachter direkt angezeigt, gespeichert, über ein Netzwerk übertragen und/oder in weiteren Bildverarbeitungsschritten weiterverarbeitet werden.

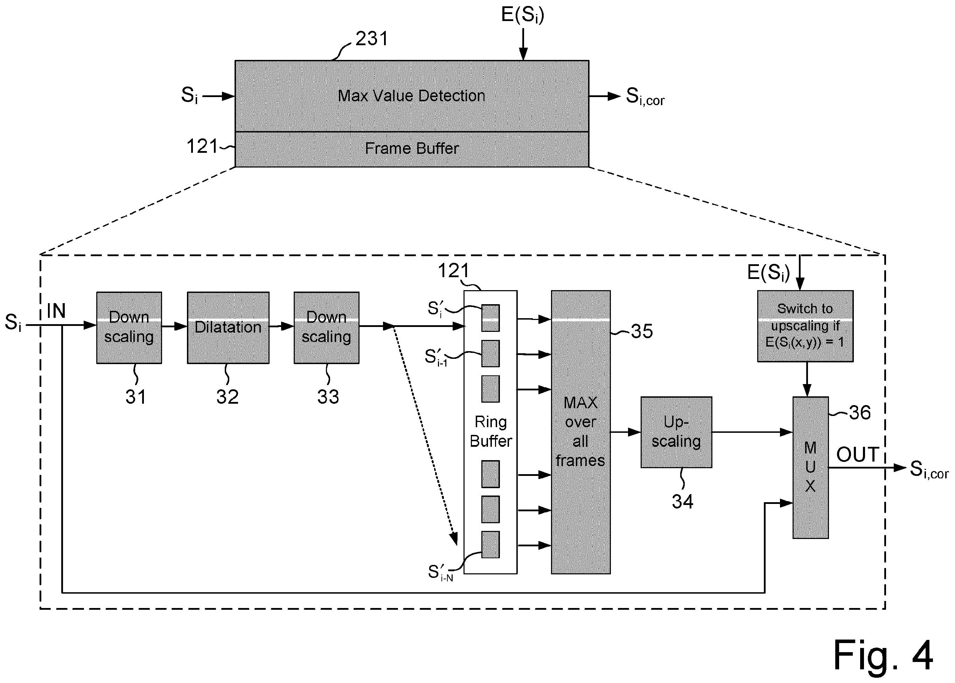

Figur 4 zeigt ein Blockdiagramm eines Ausführungsbeispiels einer erfindungsgemäßen Fehlerkorrektur unter Verwendung maximaler Helligkeitswerte. Es handelt sich dabei um eine detaillierte Darstellung des bereits in der Figur 3 gezeigten Funktionsblocks 231 und des ihm zugeordneten Datenspeichers 121.

Die mit der Belichtungsreihe eingelesenen Bilddaten des Vergleichsbildes Si bilden die Eingangsdaten IN des für die maximalwertbasierte Bildfehlerkorrektur der Bilddaten verantwortlichen Funktionsblocks 231. Die Bilddaten liegen dabei in Form von Helligkeitswerten vor.

Die Bilddaten können insbesondere auch als Werte der RGGB-Farbkomponenten vorliegen, wie sie beispielsweise von einem Bayer-Sensor ausgegeben werden. Die Blöcke 31, 32, 33, 121, 35 und 34 sind in diesem Fall für jede Farbkomponente einmal vorhanden. Dabei wird vorteilhaft von den beiden G-Werten im Bayer-Muster nur das Maximum prozessiert und nicht beide G-Werte getrennt. Hinter Block 34 wird dieser prozessierte G-Wert über den Multiplexer 36 für beide G-Werte des Ausgangssignals Si,cor verwendet, sofern die Fehlermaske $E(S_i)$ an der Bildposition einen Bildfehler anzeigt.

Als weitere Eingangsdaten werden dem Funktionsblock 231 die Daten der Fehlermaske $E(S_i)$ bereitgestellt, welche die Fehlerpositionen von Bildfehlern innerhalb des Vergleichsbildes Si anzeigen. In der Detaildarstellung der Figur 4 ist erkennbar, dass die Bilddaten des Vergleichsbildes Si im Funktionsblock 31 zunächst durch Downscaling verkleinert werden. Vorteilhaft kann dieses Downscaling beispielsweise in Form eines 1:4-Subsamplings erfolgen. Anschließend werden die Bilddaten im Funktionsblock 32 einer Dilatation unterzogen, wobei die hellen Bereiche des Vergleichsbildes Si aufgeweitet werden. Nach der Dilatation werden die Bilddaten im Funktionsblock 33 erneut durch Downscaling verkleinert. Vorteilhaft kann dieses Downscaling beispielsweise in Form eines 1:8-Subsamplings erfolgen.

Auf diese Weise wird eine veränderte Kopie S'i des Vergleichsbildes Si erzeugt, die in dem Datenspeicher 121 gespeichert wird. Der Datenspeicher 121 ist ein Ringspeicher, der so konfiguriert ist, dass er N+1 gespeicherte Bilder $S'_{i-N}, ... S'_{i-1}$, S'i aufnehmen kann. Dabei wird, wenn die veränderte Kopie S'i des aktuell, d. h. des zuletzt eingelesenen Vergleichsbildes Si in dem Ringspeicher 121 gespeichert wird, das älteste darin gespeicherte Bild $S'_{i-N-1}$ gelöscht, sodass der Ringspeicher immer die aktuellsten N+1 gespeicherten Bilder enthält. Liegen die Bilddaten Werte der Farbkomponenten R, G und B eines RGB-Farbraums vor, so werden die einzelnen Werte der Farbkomponenten R, G und B in dem Ringspeicher gespeichert.

Im Funktionsblock 35 wird anschließend für sämtliche möglichen Korrekturpositionen der maximale örtliche Helligkeitswert aus den Bilddaten aller Bilder der Vergleichsbildzeitreihe $S'_{i-N}, ... S'_{i-1}$, S'i ermittelt und gespeichert. Auf diese Weise wird ein Maximalhelligkeitsbild generiert, das im Funktionsblock 34 durch Upscaling vergrößert wird. Die Bilddaten des daraus resultierenden Maximalhelligkeitsbilds weisen für jede Korrekturposition den maximalen Helligkeitswert der Vergleichsbildzeitreihe $S'_{i-N}, ... S'_{i-1}$, S'i auf.

Im Funktionsblock 36 wird schließlich unter Verwendung der Fehlermaske E(Si), der Bilddaten des durch Upscaling (Umkehrung von Funktionsblock 31 und 33, Upscaling-Faktor beispielweise 32:1) erhaltenen Maximalhelligkeitsbildes und der Bilddaten des Vergleichsbildes Si ein korrigiertes Vergleichsbild $S_{i,cor}$ erzeugt, indem die maximalen Helligkeitswerte an denjenigen Positionen des Vergleichsbildes Si eingefügt werden, für welche die Fehlermaske E(Si) einen Bildfehler anzeigt. Die Bilddaten des korrigiertes Vergleichsbild $S_{i,cor}$ bilden die Ausgangsdaten OUT des Funktionsblocks 231.

Auf diese Weise werden innerhalb des Funktionsblocks 231 die durch flackernde Lichtinformationen hervorgerufenen Bildfehler des Vergleichsbildes Si durch eine maximalwertbasierte Bildfehlerkorrektur korrigiert.

Die Ausführungen zum Ausführungsbeispiel der Figur 4 gelten in entsprechender Weise für den in Figur 3 gezeigten und für die Bildfehlerkorrektur des Vergleichsbildes VS verantwortlichen Funktionsblock 232 und den ihm zugeordneten Datenspeicher 122.

**EP 3 809 691 B1**

Figur 5 zeigt ein Blockdiagramm einer Bildverarbeitungseinheit zur Durchführung des erfindungsgemäßen Verfahrens. Die Bildverarbeitungseinheit hat eine Datenverarbeitungseinheit 11 und einen Datenspeicher 12 zum Speichern von Bilddaten. Die Datenverarbeitungseinheit kann beispielsweise ein geeignet programmierter Mikroprozessor, ein digitaler Signalprozessor (DSP), ein spezialisierter Bildverarbeitungsprozessor, ein FPGA (Field Programmable Gate Array), ein ASIC (anwenderspezifischer integrierter Schaltkreis) oder Ähnliches sein. Die Datenverarbeitungseinheit 11 greift lesend und schreibend auf den Datenspeicher 12 zu. Dieser kann fragmentiert sein oder aus mehreren Speichereinheiten bestehen.

Von einem Bildsensor 10, der eine Videokamera, insbesondere eine digitale Videokamera, eine andere Art von Kamera oder Bestandteil einer solchen Kamera sein kann, werden Bilder und/oder Bilder umfassende Belichtungsreihen erzeugt. Der Bildsensor 10 ist direkt oder indirekt mit der Bildverarbeitungseinheit 13 verbunden, sodass die Bilddaten der Bilder bzw. der Belichtungsreihe auf diesem Wege von der Bildverarbeitungseinheit 13 eingelesen werden können. Die Bilddaten können dann im Datenspeicher 12 zwischengespeichert werden.

Nach der Verarbeitung der Bilddaten in der zuvor beschriebenen Weise durch die Datenverarbeitungseinheit 11 können Ausgangsbilder an eine Anzeigeeinheit 14, die beispielsweise ein Bildschirm oder sonstiges Display sein kann, zur Wiedergabe übertragen werden. Die Anzeigeeinheit 14 ist zu diesem Zweck direkt oder indirekt mit der Bildverarbeitungseinheit 13 verbunden.

Denkbar ist aber auch, dass die Ausgangsbilddaten auf einem geeigneten Datenträger abgespeichert und/oder über eine Datenverbindung weiter übertragen werden.

Die Bildverarbeitungseinheit 13 ist in einem Fahrzeug, insbesondere in einem Kraftfahrzeug, integriert. Der Bildsensor 10 und die Anzeigeeinheit 14 können insbesondere herkömmliche Rückspiegel ersetzen oder diese ergänzen. Der Bildsensor 10 ist dabei auf das zu beobachtende Blickfeld ausgerichtet und die Anzeigeeinheit 14 im geeigneten Blickraum des Fahrers angeordnet.

**Patentansprüche**

1. Verfahren zur Erkennung und Korrektur von durch flackernde Lichtinformationen (1,2) hervorgerufenen Bildfehlern in von einem Bildsensor (10) erzeugten Bildern ($S_i$, $VS_i$), das durch eine in ein Kraftfahrzeug integrierte Bildverarbeitungseinheit (13) ausgeführt wird, wobei der Bildsensor (10) in das Kraftfahrzeug integriert ist, mit den Schritten:

   - Einlesen einer Belichtungsreihe, die mindestens ein Referenzbild ($L_i$) und mindestens ein Vergleichsbild ($S_i$, $VS_i$) umfasst, wobei die Bilder der Belichtungsreihe dieselbe Szene (4) zeigen und die Belichtungszeit des Referenzbildes ($L_i$) länger ist als die Belichtungszeit des Vergleichsbildes ($S_i$, $VS_i$),
   - Ermitteln örtlicher Abweichungen der Bilddaten des Vergleichsbildes ($S_i$,$VS_i$) von den Bilddaten des Referenzbildes ($L_i$) durch örtliches Vergleichen der Bilddaten des Vergleichsbildes ($S_i$, $VS_i$) mit den Bilddaten des Referenzbildes ($L_i$),
   - Generieren einer Fehlermaske ($E(S_i)$,$E(VS_i)$) in Abhängigkeit der ermittelten örtlichen Abweichungen der Bilddaten, wobei die Fehlermaske ($E(S_i)$,$E(VS_i)$) die Fehlerpositionen von Bildfehlern innerhalb des Vergleichsbildes ($S_i$, $VS_i$) anzeigt,
   - Vorhalten einer Vergleichsbildzeitreihe ($S'_{i-N},...,S'_i$) in einem Datenspeicher (12, 121, 122), wobei die Vergleichsbildzeitreihe eine Anzahl gespeicherter Bilder ($S'_{i-N},..., S'_{i-1}$) umfasst, die mit der gleichen Belichtungszeit wie das Vergleichsbild ($S_i$) zu anderen Zeitpunkten als das Vergleichsbild ($S_i$), insbesondere zu früheren Zeitpunkten als das Vergleichsbild ($S_i$), von dem Bildsensor (10) erzeugt wurden,
   - Ermitteln örtlicher Korrekturwerte für die Bilddaten des Vergleichsbildes ($S_i$, $VS_i$) durch eine Schätzung, bei der je örtlichem Korrekturwert ein maximaler örtlicher Helligkeitswert aus den Bilddaten der Bilder der Vergleichsbildzeitreihe ($S'i-N,...,S'i$) ermittelt und der maximale örtliche Helligkeitswert als örtlicher Korrekturwert verwendet wird, wobei jeder örtliche Korrekturwert einer Korrekturposition innerhalb des Vergleichsbildes ($S_i$, $VS_i$) zugeordnet ist,
   - Erzeugen eines korrigierten Vergleichsbildes ($S_{i,cor}$,$VS_{i,cor}$) durch Einfügen der örtlichen Korrekturwerte an den durch die Fehlermaske ($E(S_i)$,$E(VS_i)$) angezeigten Fehlerpositionen des Vergleichsbildes ($S_i$, $VS_i$).

2. Verfahren nach Anspruch 1, **dadurch gekennzeichnet, dass** die Bilddaten Helligkeitswerte sind.

3. Verfahren nach Anspruch 1 oder 2, **dadurch gekennzeichnet, dass** der Bildsensor (10) ein HDR-Bildsensor ist und die Belichtungsreihe eine von dem HDR-Bildsensor erzeugte HDR-Belichtungsreihe ist.

4. Verfahren nach einem der vorhergehenden Ansprüche, **dadurch gekennzeichnet, dass** der Bildsensor (10) dazu eingerichtet ist, die Bilder ($L_i$, $S_i$, $VS_i$) der Belichtungsreihe mit einer auswählbaren Lichtempfindlichkeit zu erzeugen, wobei die Lichtempfindlichkeit mindestens auswählbar ist zwischen einer ersten Lichtempfindlichkeit und einer zweiten Lichtempfindlichkeit, die geringer ist als die erste Lichtempfindlichkeit, und das Verfahren den folgenden zusätzlichen Schritt umfasst:

- Erzeugen der Belichtungsreihe mit dem Bildsensor (10), wobei zumindest das Referenzbild ($L_i$) mit der zweiten Lichtempfindlichkeit erzeugt wird.

5. Verfahren nach einem der Ansprüche 1 bis 3, **dadurch gekennzeichnet, dass** der Bildsensor (10) dazu eingerichtet ist, die Bilder ($L_i$, $S_i$, $VS_i$) der Belichtungsreihe mit einer auswählbaren Lichtempfindlichkeit zu erzeugen, wobei die Lichtempfindlichkeit mindestens auswählbar ist zwischen einer ersten Lichtempfindlichkeit und einer zweiten Lichtempfindlichkeit, die geringer ist als die erste Lichtempfindlichkeit, und das Verfahren die folgenden zusätzlichen Schritte umfasst:

- Auswählen zumindest der Lichtempfindlichkeit, mit der das Referenzbild ($L_i$) erzeugt wird, in Abhängigkeit der Helligkeit der Szene (4), wobei bei geringerer Helligkeit der Szene (4) die erste Lichtempfindlichkeit und bei größerer Helligkeit der Szene (4) die zweite Lichtempfindlichkeit ausgewählt wird,
- Erzeugen der Belichtungsreihe mit dem Bildsensor (10), wobei zumindest das Referenzbild ($L_i$) mit der ausgewählten Lichtempfindlichkeit erzeugt wird.

6. Verfahren nach einem der vorhergehenden Ansprüche, **dadurch gekennzeichnet, dass** zum Ermitteln der örtlichen Abweichungen die Bilddaten normiert werden und die normierten Bilddaten an einer Position des Vergleichsbildes ($S_i$, $VS_i$) mit den normierten Bilddaten an derselben Position des Referenzbildes ($L_i$) verglichen werden, insbesondere indem eine Differenz ermittelt wird zwischen den normierten Bilddaten an einer Position des Vergleichsbildes ($S_i$, $VS_i$) und den normierten Bilddaten an derselben Position des Referenzbildes ($L_i$).

7. Verfahren nach einem der Ansprüche 4 oder 5 und nach Anspruch 6, **dadurch gekennzeichnet, dass** zur Normierung der Bilddaten ein relatives Lichtempfindlichkeitsverhältnis zwischen der Lichtempfindlichkeit des Referenzbildes ($L_i$) und der Lichtempfindlichkeit des Vergleichsbildes ($S_i$, $VS_i$) und/oder ein Belichtungszeitverhältnis zwischen der Belichtungszeit des Referenzbildes ($L_i$) und der Belichtungszeit des Vergleichsbildes ($S_i$, $VS_i$) verwendet wird.

8. Verfahren nach einem der vorhergehenden Ansprüche, **dadurch gekennzeichnet, dass** die Bilder der Vergleichsbildzeitreihe ($S'_{i-N}, ..., S'_i$) vor dem Speichern in dem Datenspeicher (12, 121, 122) einer Dilatation unterzogen werden und/oder durch Downscaling verkleinert werden und/oder komprimiert werden und/oder die Bilddaten der gespeicherten Bilder der Vergleichsbildzeitreihe ($S'_{i-N}, ..., S'_i$) in Bezug auf das Vergleichsbild ($S_i$) bewegungskompensiert sind und/oder vor dem Ermitteln der örtlichen Korrekturwerte für die Bilddaten des Vergleichsbildes eine Bewegungskompensation der Bilddaten der gespeicherten Bilder der Vergleichsbildzeitreihe ($S'_{i-N}, ..., S'_i$) in Bezug auf das Vergleichsbild ($S_i$) durchgeführt wird.

9. Verfahren nach einem der vorhergehenden Ansprüche, **dadurch gekennzeichnet, dass** die Belichtungsreihe Bestandteil einer von dem Bildsensor (10) erzeugten Belichtungsreihensequenz ist, wobei die Belichtungsreihensequenz eine Folge von Belichtungsreihen umfasst und die Folge von Belichtungsreihen zeitlich aufeinanderfolgende Szenen (4) zeigt, die flackernde Lichtinformationen (1,2) enthalten können.

10. Verfahren nach Anspruch 9, **dadurch gekennzeichnet, dass** die Belichtungszeit mindestens eines Referenzbilds ($L_i$) zwischen 50 % und 100 % der Bilddauer der Belichtungsreihensequenz, insbesondere zwischen 25/3 ms und 50/3 ms beträgt und/oder die Belichtungszeit mindestens eines Vergleichsbildes ($S_i$) 1 ms oder weniger beträgt.

11. Verfahren nach Anspruch 9 oder 10, **dadurch gekennzeichnet, dass** die Verfahrensschritte wiederholt werden, wobei das Verfahren auf eine Mehrzahl von Belichtungsreihen der Belichtungsreihensequenz oder auf jede Belichtungsreihe der Belichtungsreihensequenz angewendet wird, um eine korrigierte Belichtungsreihensequenz zu erzeugen, die korrigierte Vergleichsbilder ($S_{i,cor}$, $VS_{i,cor}$) umfasst.

12. Verfahren nach einem der Ansprüche 9 bis 11, **dadurch gekennzeichnet, dass** auf die Bilddaten der Bilder der korrigierten Belichtungsreihensequenz ein Korrekturverfahren zur Korrektur verbleibender, durch flackernde Lichtinformationen (1,2) hervorgerufener Bildfehler angewendet wird, wobei sich das Korrekturverfahren auf eine Bewegungsschätzung und eine Bewegungskompensation der Bilddaten der Bilder der korrigierten Belichtungsreihensequenz und/oder ein Mischen der Bilddaten verschiedener Bilder der korrigierten Belichtungsreihensequenz stützt.

13. Bildverarbeitungseinheit (13) mit einem Bildsensor (10), einem Datenspeicher (12) zum Speichern von Bilddaten und einer Datenverarbeitungseinheit (11), **dadurch gekennzeichnet, dass** die Bildverarbeitungseinheit (13) in ein Kraftfahrzeug integriert und zur Durchführung des Verfahrens nach einem der vorhergehenden Ansprüche eingerichtet ist.

14. Computerprogramm mit Programmcodemitteln, die zur Durchführung des Verfahrens nach einem der Ansprüche 1 bis 12 eingerichtet sind, wenn das Computerprogramm mit einer Bildverarbeitungseinheit (13) nach Anspruch 13 ausgeführt wird.

**Claims**

1. Method for detecting and correcting image errors caused by flickering light information (1, 2) in images ($S_i$, $VS_i$) generated by an image sensor (10), the method being carried out by an image processing unit (13) integrated in a motor vehicle, wherein the image sensor (10) is integrated in the motor vehicle, and having the steps:

   - reading in an exposure series comprising at least one reference image ($L_i$) and at least one comparison image ($S_i$, $VS_i$), wherein the images of the exposure series show the same scene (4) and the exposure time of the reference image ($L_i$) is longer than the exposure time of the comparison image ($S_i$, $VS_i$),
   - determining local deviations of the image data of the comparison image ($S_i$, $VS_i$) from the image data of the reference image ($L_i$) by locally comparing the image data of the comparison image ($S_i$, $VS_i$) with the image data of the reference image ($L_i$),
   - generating an error mask ($E(S_i)$, $E(VS_i)$) as a function of the determined local deviations of the image data, wherein the error mask ($E(S_i)$, $E(VS_i)$) indicates the error positions of image errors within the comparison image ($S_i$, $VS_i$),
   - providing a comparison image time series ($S'_{i-N}$, ..., $S'_i$) in a data memory (12, 121, 122), wherein the comparison image time series comprises a number of stored images ($S'_{i-N}$, ..., $S'_{i-1}$) which were generated by the image sensor (10) with the same exposure time as the comparison image ($S_i$) at different times than the comparison image ($S_i$), in particular at earlier times than the comparison image ($S_i$),
   - determining local correction values for the image data of the comparison image ($S_i$, $VS_i$) by an estimation in which, for each local correction value, a maximum local brightness value is determined from the image data of the images of the comparison image time series ($S'i-N$, ..., $S'i$) and the maximum local brightness value is used as the local correction value, wherein each local correction value is assigned to a correction position within the comparison image ($S_i$, $VS_i$),
   - generating a corrected comparison image ($S_{i, cor}$, $VS_{i,cor}$) by inserting the local correction values at the error positions of the comparison image ($S_i$, $VS_i$) indicated by the error mask ($E(S_i)$, $E(VS_i)$).

2. Method according to Claim 1, **characterized in that** the image data are brightness values.

3. Method according to Claim 1 or 2, **characterized in that** the image sensor (10) is an HDR image sensor and the exposure series is an HDR exposure series generated by the HDR image sensor.

4. Method according to any one of the preceding claims, **characterized in that** the image sensor (10) is configured to generate the images ($L_i$, $S_i$, $VS_i$) of the exposure series with a selectable light sensitivity, wherein the light sensitivity is at least selectable between a first light sensitivity and a second light sensitivity which is lower than the first light sensitivity, and the method comprises the following additional step:

   - generating the exposure series with the image sensor (10), wherein at least the reference image ($L_i$) is generated with the second light sensitivity.

5. Method according to any one of Claims 1 to 3, **characterized in that** the image sensor (10) is configured to generate the images ($L_i$, $S_i$, $VS_i$) of the exposure series with a selectable light sensitivity, wherein the light sensitivity is at least selectable between a first light sensitivity and a second light sensitivity which is lower than the first light sensitivity, and the method comprises the following additional steps:

   - selecting at least the light sensitivity with which the reference image ($L_i$) is generated as a function of the brightness of the scene (4), wherein the first light sensitivity is selected in the case of lower brightness of the scene (4) and the second light sensitivity is selected in the case of higher brightness of the scene (4),
- generating the exposure series with the image sensor (10), wherein at least the reference image ($L_i$) is generated with the selected light sensitivity.

6. Method according to any one of the preceding claims, **characterized in that**, in order to determine the local deviations, the image data are normalized and the normalized image data at a position of the comparison image ($S_i$, $VS_i$) are compared with the normalized image data at the same position of the reference image ($L_i$), in particular by determining a difference between the normalized image data at a position of the comparison image ($S_i$, $VS_i$) and the normalized image data at the same position of the reference image ($L_i$).

7. Method according to any one of claims 4 and 5 and according to claim 6, **characterized in that**, in order to normalize the image data, a relative light sensitivity ratio between the light sensitivity of the reference image ($L_i$) and the light sensitivity of the comparison image ($S_i$, $VS_i$) and/or an exposure time ratio between the exposure time of the reference image ($L_i$) and the exposure time of the comparison image ($S_i$, $VS_i$) is used.

8. Method according to any one of the preceding claims, **characterized in that** the images of the comparison image time series ($S'_{i-N}$, ..., $S'_i$) are subjected to a dilatation before being stored in the data memory (12, 121, 122) and/or are reduced in size by downscaling and/or are compressed and/or the image data of the stored images of the comparison image time series ($S'_{i-N}$, ..., $S'_i$) are motion-compensated with respect to the comparison image ($Si$) and/or a motion compensation of the image data of the stored images of the comparison image time series ($S'_{i-N}$, ..., $S'_i$) is carried out with respect to the comparison image ($Si$) before determining the local correction values for the image data of the comparison image.

9. Method according to any one of the preceding claims, **characterized in that** the exposure series is part of an exposure series sequence generated by the image sensor (10), wherein the exposure series sequence comprises a sequence of exposure series and the sequence of exposure series shows temporally successive scenes (4) which may contain flickering light information (1, 2).

10. Method according to Claim 9, **characterized in that** the exposure time of at least one reference image ($L_i$) is between 50% and 100% of the image duration of the exposure series sequence, in particular between 25/3 ms and 50/3 ms, and/or the exposure time of at least one comparison image ($S_i$) is 1 ms or less.

11. Method according to Claim 9 or 10, **characterized in that** the method steps are repeated, wherein the method is applied to a plurality of exposure series of the exposure series sequence or to each exposure series of the exposure series sequence in order to generate a corrected exposure series sequence comprising corrected comparison images ($S_{i, cor}$, $VS_{i,cor}$).

12. Method according to one of Claims 9 to 11, **characterized in that** a correction method for correcting remaining image errors caused by flickering light information (1, 2) is applied to the image data of the images of the corrected exposure series sequence, wherein the correction method is based on a motion estimation and a motion compensation of the image data of the images of the corrected exposure series sequence and/or a mixing of the image data of different images of the corrected exposure series sequence.

13. Image processing unit (13) having an image sensor (10), a data memory (12) for storing image data and a data processing unit (11), **characterized in that** the image processing unit (13) is integrated in a motor vehicle and is configured to carry out the method according to any one of the preceding claims.

14. Computer program having program code means which are configured to carry out the method according to any one of Claims 1 to 12 when the computer program is executed with an image processing unit (13) according to claim 13.

**Revendications**

1. Procédé de détection et de correction d'erreurs d'image provoquées par des informations lumineuses scintillantes (1,2) dans des images ($S_i$, $VS_i$) générées par un capteur d'image (10), qui est réalisé par une unité de traitement d'image (13) intégrée dans un véhicule automobile, le capteur d'image (10) étant intégré dans le véhicule automobile, comprenant les étapes suivantes :

- lecture d'une série d'éclairage qui comprend au moins une image de référence (L$_i$) et au moins une image de comparaison (S$_i$, VS$_i$), les images de la série d'éclairage montrant la même scène (4) et le temps d'éclairage de l'image de référence (L$_i$) étant plus long que le temps d'éclairage de l'image de comparaison (S$_i$, VS$_i$),

- détermination d'écarts locaux des données d'image de l'image de comparaison (S$_i$, VS$_i$) par rapport aux données d'image de l'image de référence (L$_i$) par comparaison locale des données d'image de l'image de comparaison (S$_i$, VS$_i$) avec les données d'image de l'image de référence (L$_i$),

- génération d'un masque d'erreur (E(S$_i$), E(VS$_i$)) en fonction des écarts locaux déterminés des données d'image, le masque d'erreur (E(S$_i$), E(VS$_i$)) indiquant les positions d'erreur d'erreurs d'image à l'intérieur de l'image de comparaison (S$_i$, VS$_i$),

- mise à disposition d'une série temporelle d'images de comparaison (S'$_{i-N}$, ..., S'$_i$) dans une mémoire de données (12, 121, 122), la série temporelle d'images de comparaison comprenant un nombre d'images mémorisées (S'$_{i-N}$, ..., S'$_{i-1}$) qui ont été générées avec le même temps d'éclairage que l'image de comparaison (S$_i$) à d'autres moments que l'image de comparaison (Si), en particulier à des moments antérieurs à l'image de comparaison (S$_i$), par le capteur d'image (10),

- détermination de valeurs de correction locales pour les données d'image de l'image de comparaison (S$_i$, VS$_i$) par une estimation dans laquelle, pour chaque valeur de correction locale, une valeur de luminosité locale maximale est déterminée à partir des données d'image des images de la série temporelle d'images de comparaison (S'i-N, ..., S'i) et la valeur de luminosité locale maximale est utilisée comme valeur de correction locale, chaque valeur de correction locale étant associée à une position de correction à l'intérieur de l'image de comparaison (S$_i$, VS$_i$),

- génération d'une image de comparaison corrigée (S$_{i, cor}$, VS$_{i, cor}$) par insertion des valeurs de correction locales aux positions d'erreur de l'image de comparaison (S$_i$, VS$_i$) indiquées par le masque d'erreur (E(S$_i$), E(VSi)).

2. Procédé selon la revendication 1, **caractérisé en ce que** les données d'image sont des valeurs de luminosité.

3. Procédé selon la revendication 1 ou 2, **caractérisé en ce que** le capteur d'image (10) est un capteur d'image HDR et la série d'exposition est une série d'exposition HDR générée par le capteur d'image HDR.

4. Procédé selon l'une quelconque des revendications précédentes, **caractérisé en ce que** le capteur d'image (10) est conçu pour générer les images (L$_i$, S$_i$, VS$_i$) de la série d'exposition avec une sensibilité à la lumière sélectionnable, la sensibilité à la lumière étant au moins sélectionnable entre une première sensibilité à la lumière et une deuxième sensibilité à la lumière qui est inférieure à la première sensibilité à la lumière, et le procédé comprend l'étape supplémentaire suivante :

- génération de la série d'exposition avec le capteur d'image (10), au moins l'image de référence (L$_i$) étant générée avec la deuxième sensibilité à la lumière.

5. Procédé selon l'une quelconque des revendications 1 à 3, **caractérisé en ce que**
le capteur d'image (10) est conçu pour générer les images (L$_i$, S$_i$, VS$_i$) de la série d'exposition avec une sensibilité à la lumière sélectionnable, la sensibilité à la lumière étant au moins sélectionnable entre une première sensibilité à la lumière et une deuxième sensibilité à la lumière qui est inférieure à la première sensibilité à la lumière, et le procédé comprend les étapes supplémentaires suivantes :

- sélection d'au moins la sensibilité à la lumière avec laquelle l'image de référence (L$_i$) est générée, en fonction de la luminosité de la scène (4), la première sensibilité à la lumière étant sélectionnée dans le cas d'une luminosité plus faible de la scène (4) et la deuxième sensibilité à la lumière étant sélectionnée dans le cas d'une luminosité plus élevée de la scène (4),
- génération de la série d'exposition avec le capteur d'image (10), au moins l'image de référence (L$_i$) étant générée avec la sensibilité à la lumière sélectionnée.

6. Procédé selon l'une quelconque des revendications précédentes, **caractérisé en ce que**, pour la détermination des écarts locaux, les données d'image sont normalisées et les données d'image normalisées à une position de l'image de comparaison (S$_i$, VS$_i$) sont comparées avec les données d'image normalisées à la même position de l'image de référence (L$_i$), en particulier **en ce qu'**une différence est déterminée entre les données d'image normalisées à une position de l'image de comparaison (S$_i$, VS$_i$) et les données d'image normalisées à la même position de l'image de référence (L$_i$).

7. Procédé selon l'une quelconque des revendications 4 et 5 et selon la revendication 6, **caractérisé en ce que**, pour la normalisation des données d'image, un rapport de sensibilité à la lumière relatif entre la sensibilité à la lumière de l'image de référence ($L_i$) et la sensibilité à la lumière de l'image de comparaison ($S_i$, $VS_i$) et/ou un rapport de temps d'éclairage entre le temps d'éclairage de l'image de référence ($L_i$) et le temps d'éclairage de l'image de comparaison ($S_i$, $VS_i$) est utilisé.

8. Procédé selon l'une quelconque des revendications précédentes, **caractérisé en ce que** les images de la série temporelle d'images de comparaison ($S'_{i-N}$, ..., $S'_i$) sont soumises à une dilatation avant la mémorisation dans la mémoire de données (12, 121, 122) et/ou sont réduites et/ou comprimées par réduction d'échelle et/ou les données d'image des images mémorisées de la série temporelle d'images de comparaison ($S'_{i-N}$, ..., $S'_i$) sont compensées en mouvement par rapport à l'image de comparaison (Si) et/ou une compensation de mouvement des données d'image des images mémorisées de la série temporelle d'images de comparaison ($S'_{i-N}$, ..., $S'_i$) par rapport à l'image de comparaison (Si) est effectuée avant la détermination des valeurs de correction locales pour les données d'image de l'image de comparaison.

9. Procédé selon l'une quelconque des revendications précédentes, **caractérisé en ce que** la série d'éclairage fait partie d'une séquence de séries d'éclairage générée par le capteur d'image (10), la séquence de séries d'éclairage comprenant une séquence de séries d'éclairage et la séquence de séries d'éclairage montrant des scènes (4) successives dans le temps qui peuvent contenir des informations lumineuses scintillantes (1, 2).

10. Procédé selon la revendication 9, **caractérisé en ce que** le temps d'éclairage d'au moins une image de référence ($L_i$) est compris entre 50 % et 100 % de la durée d'image de la séquence de séries d'éclairage, en particulier entre 25/3 ms et 50/3 ms et/ou le temps d'éclairage d'au moins une image de comparaison ($S_i$) est de 1 ms ou moins.

11. Procédé selon la revendication 9 ou 10, **caractérisé en ce que** les étapes du procédé sont répétées, le procédé étant appliqué à une pluralité de séries d'éclairage de la séquence de séries d'éclairage ou à chaque série d'éclairage de la séquence de séries d'éclairage pour générer une séquence de séries d'éclairage corrigée qui comprend des images de comparaison corrigées ($S_{i, cor}$, $VS_{i, cor}$).

12. Procédé selon l'une quelconque des revendications 9 à 11, **caractérisé en ce qu'**un procédé de correction pour corriger des erreurs d'image restantes provoquées par des informations lumineuses scintillantes (1, 2) est appliqué aux données d'image des images de la séquence de séries d'éclairage corrigée, le procédé de correction s'appuyant sur une estimation de mouvement et une compensation de mouvement des données d'image des images de la séquence de séries d'éclairage corrigée et/ou un mélange des données d'image de différentes images de la séquence de séries d'éclairage corrigée.

13. Unité de traitement d'image (13) comprenant un capteur d'image (10), une mémoire de données (12) pour stocker des données d'image et une unité de traitement de données (11), **caractérisée en ce que** l'unité de traitement d'image (13) est intégrée dans un véhicule automobile et est conçue pour réaliser le procédé selon l'une quelconque des revendications précédentes.

14. Programme informatique comprenant des moyens de code de programme qui sont conçus pour réaliser le procédé selon l'une quelconque des revendications 1 à 12 lorsque le programme informatique est exécuté avec une unité de traitement d'image (13) selon la revendication 13.

$L_i(x_2,y_2) = 255$

$S_i(x_2,y_2) = 20$

$VS_i(x_2,y_2) = 5$

$L_i(x_1,y_1) = 255$

$S_i(x_1,y_1) = 200$

$VS_i(x_1,y_1) = 50$

$E(S_i)$

$E(VS_i)$

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040012692 A1
- US 20140153839 A1
- US 20150253198 A1